# EUROPEAN PATENT APPLICATION

(11) **EP 4 801 147 A1**
(43) Date of publication of application: **02.09.2026**
(21) Application number: 24890283.5
(22) Date of filing: 03.09.2024
(51) Int. Cl.: H04W 72/0446

(54) **COMMUNICATION METHOD AND COMMUNICATION APPARATUS**

(30) Priority: 17.11.2023 CN 202311550941
(71) Applicant: Huawei Technologies Co., Ltd., Shenzhen, Guangdong 518129 (CN)
(72) Inventor: LU, Shaozhong, Shenzhen, Guangdong 518129 (CN); GUO, Zhiheng, Shenzhen, Guangdong 518129 (CN); SONG, Xinghua, Shenzhen, Guangdong 518129 (CN); HOU, Hailong, Shenzhen, Guangdong 518129 (CN)
(74) Representative: Maiwald GmbH
(86) International application number: PCT/CN2024/116480
(87) International publication number: WO 2025/102923

(57) **Abstract**

This application provides a communication method. The method includes: A terminal device receives a first message and a second message from a network device, where the first message indicates the terminal device to receive a first signal, the second message indicates a first resource set including a first resource and a second resource. A time domain resource of the first resource is in a subband full duplex SBFD time unit, and a time domain resource of the second resource is in a non-SBFD time unit. In addition, the terminal device receives the first signal on a resource other than the first resource and the second resource.

## Description

This application claims priority to Chinese Patent Application No. 202311550941.8, filed with the China National Intellectual Property Administration on November 17, 2023 and entitled "COMMUNICATION METHOD AND COMMUNICATION APPARATUS", which is incorporated herein by reference in its entirety.

### TECHNICAL FIELD

Embodiments of this application relate to the communication field, and specifically, to a communication method and a communication apparatus.

### BACKGROUND

Time division duplex (time division duplex, TDD) is widely applied to deployment of a new radio (new radio, NR) wireless communication system in the 5th generation mobile communication systems (5th generation, 5G). Limited allocation of uplink time domain resources results in reduced uplink coverage and increased delay in TDD. A possible method for enhancing uplink coverage is to use subband full duplex (subband full duplex, SBFD). In SBFD, frequency bands on downlink symbols are divided into one or more uplink subbands and one or more downlink subbands, and uplink transmission is allowed in uplink subbands of downlink symbols.

Specifically, for an antenna configuration at the network device side for SBFD, the numbers of transceiver units (transceiver unit, TxRU) differ between SBFD and non-SBFD time units, and channel environments and interference environments also differ. Therefore, the terminal device needs to separately measure and report channel state information (channel state information, CSI) for the SBFD time unit and for downlink (or flexible) time units. Determining time-frequency resources unavailable for receiving or sending signals becomes an urgent problem to be resolved in this antenna configuration scenario.

### SUMMARY

To resolve the foregoing technical problem, this application provides a communication method and a communication apparatus, to determine, in scenarios with different channel environments and interference environments in SBFD and non-SBFD time units, time-frequency resources unavailable for receiving or sending signals.

According to a first aspect, a communication method is provided. The method may be performed by a terminal device, or may be performed by a chip, a circuit, or the like. This is not limited in this application.

The communication method includes: receiving a first message, where the first message indicates reception of a first signal; receiving a second message, where the second message indicates a first resource set including a first resource and a second resource, a time domain resource of the first resource is in an SBFD time unit, and a time domain resource of the second resource is in a non-SBFD time unit; and receiving the first signal on a resource other than the first resource and the second resource.

Based on the foregoing technical solution, an example in which an execution body is a terminal device is used. The terminal device receives the first message and the second message, where the first message indicates the terminal device to receive the first signal, and the second message indicates the first resource set including the first resource and the second resource. The terminal device may receive the first signal on the resource other than the first resource and the second resource (for example, receive a physical downlink shared channel (physical downlink shared channel, PDSCH)). Specifically, a time-frequency resource of the first resource is in the SBFD time unit, and a time-frequency resource of the second resource is in the non-SBFD time unit. It may be understood that in this technical solution, a network device may separately configure related resources for the SBFD time unit and the non-SBFD time unit by using the second message, to configure needed resources in different time units in a scenario in which a channel environment and an interference environment in the SBFD time unit are different from a channel environment and an interference environment in the non-SBFD time unit. This improves resource configuration flexibility, and can determine, based on the configured resources, a time-frequency resource that cannot be used to receive or send a signal.

With reference to the first aspect, in some implementations of the first aspect, the first resource set includes one or more of the following: two periodic zero-power channel state information reference signal ZP CSI-RS resource sets, two semi-persistent ZP CSI-RS resource set lists, or two aperiodic ZP CSI-RS resource set lists, where the two periodic ZP CSI-RS resource sets include a first periodic ZP CSI-RS resource set and a second periodic ZP CSI-RS resource set, the two semi-persistent ZP CSI-RS resource set lists include a first semi-persistent ZP CSI-RS resource set list and a second semi-persistent ZP CSI-RS resource set list, and the two aperiodic ZP CSI-RS resource set lists include a first aperiodic ZP CSI-RS resource set list and a second aperiodic ZP CSI-RS resource set list; and the first resource is included in the first periodic ZP CSI-RS resource set, and the second resource is included in the second periodic ZP CSI-RS resource set; or the first resource is included in the first semi-persistent ZP CSI-RS resource set list, and the second resource is included in the second semi-persistent ZP CSI-RS resource set list; or the first resource is included in the first aperiodic ZP CSI-RS resource set list, and the second resource is included in the second aperiodic ZP CSI-RS resource set list.

Based on the foregoing technical solution, to configure related resources for the SBFD time unit and the non-SBFD time unit respectively, the network device may configure one or more of the two periodic zero-power channel state information reference signal ZP CSI-RS resource sets, the two semi-persistent ZP CSI-RS resource set lists, or the two aperiodic ZP CSI-RS resource set lists by using the second message, where a number of ZP CSI-RS resources included in each ZP CSI-RS resource set is the same as a number of ZP CSI-RS resources included in a current ZP CSI-RS resource set. In comparison with an existing ZP CSI-RS resource configuration manner (configuring one or more of one periodic zero-power channel state information reference signal ZP CSI-RS resource set, one semi-persistent ZP CSI-RS resource set list, or one aperiodic ZP CSI-RS resource set list), in this technical solution, it is equivalent to expanding a number of ZP CSI-RS resources by configuring a plurality of ZP CSI-RS resource set lists, so that the number of ZP CSI-RS resources meets requirements of the SBFD time unit and the non-SBFD time unit.

With reference to the first aspect, in some implementations of the first aspect, if the first resource is included in the first semi-persistent ZP CSI-RS resource set list, and the second resource is included in the second semi-persistent ZP CSI-RS resource set list, the method further includes: receiving a third message, where the third message includes a first field and a second field; and the first field is used to activate the first resource in the first semi-persistent ZP CSI-RS resource set list, and the second field is used to activate the second resource in the second semi-persistent ZP CSI-RS resource set list; or the first field is used to deactivate a third resource in the first semi-persistent ZP CSI-RS resource set list, and the second field is used to deactivate a fourth resource in the second semi-persistent ZP CSI-RS resource set list.

Based on the foregoing technical solution, if the first resource and the second resource are resources in the semi-persistent ZP CSI-RS resource set lists, the network device may activate the semi-persistent ZP CSI-RS resource sets by using the third message.

With reference to the first aspect, in some implementations of the first aspect, if the first resource is included in the first semi-persistent ZP CSI-RS resource set list, and the second resource is included in the second semi-persistent ZP CSI-RS resource set list, the method further includes: receiving a third message #1, where the third message #1 includes a first field #1, and the first field #1 is used to activate the first resource in the first semi-persistent ZP CSI-RS resource set list and is used to activate the second resource in the second semi-persistent ZP CSI-RS resource set list; or the first field #1 is used to deactivate a third resource in the first semi-persistent ZP CSI-RS resource set list and is used to deactivate a fourth resource in the second semi-persistent ZP CSI-RS resource set list.

With reference to the first aspect, in some implementations of the first aspect, the third message includes a medium access control (medium access control, MAC) control element (control element, CE).

With reference to the first aspect, in some implementations of the first aspect, the MAC CE includes a first bit and a second bit. If the first bit is a first value, it indicates that activation or deactivation of a ZP CSI-RS resource set in the first semi-persistent ZP CSI-RS resource set list or the second semi-persistent ZP CSI-RS resource set list is determined based on the second bit; or if the first bit is a second value, it indicates that ZP CSI-RS resource sets in the first semi-persistent ZP CSI-RS resource set list and the second semi-persistent ZP CSI-RS resource set list are to be activated or deactivated.

With reference to the first aspect, in some implementations of the first aspect, if the first resource is included in the first aperiodic ZP CSI-RS resource set list, and the second resource is included in the second aperiodic ZP CSI-RS resource set list, the method further includes: receiving a fourth message, where the fourth message includes a third field and a fourth field, the third field is used to trigger the first resource in the first aperiodic ZP CSI-RS resource set list, and the fourth field is used to trigger the second resource in the second aperiodic ZP CSI-RS resource set list.

Based on the foregoing technical solution, if the first resource and the second resource are resources in the aperiodic ZP CSI-RS resource set lists, the network device may trigger the aperiodic ZP CSI-RS resource sets by using the fourth message.

With reference to the first aspect, in some implementations of the first aspect, if the first resource is included in the first aperiodic ZP CSI-RS resource set list, and the second resource is included in the second aperiodic ZP CSI-RS resource set list, the method further includes: The terminal device receives a fourth message #1 from the network device, where the fourth message #1 includes a third field #1, and the third field #1 is used to trigger the first resource in the first aperiodic ZP CSI-RS resource set list and the second resource in the second aperiodic ZP CSI-RS resource set list.

With reference to the first aspect, in some implementations of the first aspect, the fourth message includes downlink control information DCI.

With reference to the first aspect, in some implementations of the first aspect, the DCI includes a first bit and a second bit. If the first bit is a first value, it indicates that triggering of a ZP CSI-RS resource set in the first aperiodic ZP CSI-RS resource set list or the second aperiodic ZP CSI-RS resource set list is determined based on the value of the second bit; or if the first bit is a second value, it indicates that ZP CSI-RS resource sets in the first aperiodic ZP CSI-RS resource set list and the second aperiodic ZP CSI-RS resource set list are to be triggered.

With reference to the first aspect, in some implementations of the first aspect, the first resource set includes one or more of the following: one periodic zero-power channel state information reference signal ZP CSI-RS resource set list, one semi-persistent ZP CSI-RS resource set list, or one aperiodic ZP CSI-RS resource set list, where the periodic ZP CSI-RS resource set list includes less than or equal to two ZP CSI-RS resource sets, the semi-persistent ZP CSI-RS resource set list includes less than or equal to 32 ZP CSI-RS resource sets, and the aperiodic ZP CSI-RS resource set list includes less than or equal to six or seven ZP CSI-RS resource sets.

Based on the foregoing technical solution, to configure related resources for the SBFD time unit and the non-SBFD time unit respectively, the network device may configure one or more of one periodic zero-power channel state information reference signal ZP CSI-RS resource set list, one semi-persistent ZP CSI-RS resource set list, or one aperiodic ZP CSI-RS resource set list by using the second message, where a number of ZP CSI-RS resource sets included in each ZP CSI-RS resource set list is greater than a number of ZP CSI-RS resource sets included in a current ZP CSI-RS resource set list. In this technical solution, it is equivalent to expanding a number of ZP CSI-RS resources by configuring a ZP CSI-RS resource set list that includes a large number of ZP CSI-RS resource sets, so that the number of ZP CSI-RS resources meets requirements of the SBFD time unit and the non-SBFD time unit.

With reference to the first aspect, in some implementations of the first aspect, if the first resource and the second resource are included in the semi-persistent ZP CSI-RS resource set list, the method further includes: receiving a fifth message, where the fifth message includes a fifth field and a sixth field, the fifth field is used to activate the first resource in the semi-persistent ZP CSI-RS resource set list, and the sixth field is used to activate the second resource in the semi-persistent ZP CSI-RS resource set list; or the fifth field is used to deactivate a third resource in the semi-persistent ZP CSI-RS resource set list, and the sixth field is used to deactivate a fourth resource in the semi-persistent ZP CSI-RS resource set list.

With reference to the first aspect, in some implementations of the first aspect, both a length of the fifth field and a length of the sixth field are 5 bits.

With reference to the first aspect, in some implementations of the first aspect, if the first resource and the second resource are included in ZP CSI-RS resources in the aperiodic ZP CSI-RS resource set list, the method further includes: receiving a sixth message, where the sixth message includes a seventh field and an eighth field, the seventh field is used to trigger the first resource in the aperiodic ZP CSI-RS resource set list, and the eighth field is used to trigger the second resource in the aperiodic ZP CSI-RS resource set list.

With reference to the first aspect, in some implementations of the first aspect, the first resource set includes one or more of the following: one periodic ZP CSI-RS resource set, one semi-persistent ZP CSI-RS resource set list, or one aperiodic ZP CSI-RS resource set list, where each ZP CSI-RS resource set includes less than or equal to 32 ZP CSI-RS resources.

Based on the foregoing technical solution, to configure related resources for the SBFD time unit and the non-SBFD time unit respectively, the network device may configure one or more of one periodic zero-power channel state information reference signal ZP CSI-RS resource set list, one semi-persistent ZP CSI-RS resource set list, or one aperiodic ZP CSI-RS resource set list by using the second message, where a number of ZP CSI-RS resources included in each ZP CSI-RS resource set is greater than a number of ZP CSI-RS resources included in a current ZP CSI-RS resource set. In this technical solution, it is equivalent to expanding a number of ZP CSI-RS resources by configuring a ZP CSI-RS resource set that includes a large number of ZP CSI-RS resources, so that the number of ZP CSI-RS resources meets requirements of the SBFD time unit and the non-SBFD time unit.

With reference to the first aspect, in some implementations of the first aspect, the first resource set includes one or more of the following: one periodic zero-power channel state information reference signal ZP CSI-RS resource set, one semi-persistent ZP CSI-RS resource set list, or one aperiodic ZP CSI-RS resource set list, where each ZP CSI-RS resource set includes less than or equal to 16 ZP CSI-RS resources, each ZP CSI-RS resource includes a first ZP CSI-RS sub-resource and a second ZP CSI-RS sub-resource, the first resource belongs to the first ZP CSI-RS sub-resource, and the second resource belongs to the second ZP CSI-RS sub-resource.

Based on the foregoing technical solution, to configure related resources for the SBFD time unit and the non-SBFD time unit respectively, the network device may configure one or more of one periodic zero-power channel state information reference signal ZP CSI-RS resource set list, one semi-persistent ZP CSI-RS resource set list, or one aperiodic ZP CSI-RS resource set list by using the second message, where each ZP CSI-RS resource includes greater than or equal to two sub-resources. In this technical solution, it is equivalent to expanding a number of ZP CSI-RS resources by configuring a ZP CSI-RS resource that includes a large number of ZP CSI-RS sub-resources, so that the number of ZP CSI-RS resources meets requirements of the SBFD time unit and the non-SBFD time unit.

With reference to the first aspect, in some implementations of the first aspect, the first ZP CSI-RS sub-resource or the second ZP CSI-RS sub-resource includes at least one of the following parameters: a resource mapping parameter, a periodicity, or an offset parameter.

According to a second aspect, a communication method is provided. The method may be performed by a network device, or may be performed by a chip, a circuit, or the like. This is not limited in this application.

The communication method includes: sending a first message, where the first message indicates reception of a first signal; sending a second message, where the second message indicates a first resource set including a first resource and a second resource, a time domain resource of the first resource is in an SBFD time unit, and a time domain resource of the second resource is in a non-SBFD time unit; and sending the first signal on a resource other than the first resource and the second resource.

Specifically, for a possible form of the first resource set, refer to the descriptions about the first resource set in the first aspect. Details are not described herein again.

For example, the first resource set includes two semi-persistent ZP CSI-RS resource set lists, and the two semi-persistent ZP CSI-RS resource set lists include a first semi-persistent ZP CSI-RS resource set list and a second semi-persistent ZP CSI-RS resource set list. If the first resource is included in the first semi-persistent ZP CSI-RS resource set list, and the second resource is included in the second semi-persistent ZP CSI-RS resource set list, the method further includes: sending a third message, where the third message includes a first field and a second field, the first field is used to activate the first resource in the first semi-persistent ZP CSI-RS resource set list, and the second field is used to activate the second resource in the second semi-persistent ZP CSI-RS resource set list; or the first field is used to deactivate a third resource in the first semi-persistent ZP CSI-RS resource set list, and the second field is used to deactivate a fourth resource in the second semi-persistent ZP CSI-RS resource set list.

For example, the first resource set includes two aperiodic ZP CSI-RS resource set lists, and the two aperiodic ZP CSI-RS resource set lists include a first aperiodic ZP CSI-RS resource set list and a second aperiodic ZP CSI-RS resource set list. If the first resource is included in the first aperiodic ZP CSI-RS resource set list, and the second resource is included in the second aperiodic ZP CSI-RS resource set list, the method further includes: sending a fourth message, where the fourth message includes a third field and a fourth field, the third field is used to trigger the first resource in the first aperiodic ZP CSI-RS resource set list, and the fourth field is used to trigger the second resource in the second aperiodic ZP CSI-RS resource set list.

For example, the first resource set includes one semi-persistent ZP CSI-RS resource set list, and the semi-persistent ZP CSI-RS resource set list includes less than or equal to 32 ZP CSI-RS resource sets. If the first resource and the second resource are included in the semi-persistent ZP CSI-RS resource set list, the method further includes: sending a fifth message, where the fifth message includes a fifth field and a sixth field, the fifth field is used to activate the first resource in the semi-persistent ZP CSI-RS resource set list, and the sixth field is used to activate the second resource in the semi-persistent ZP CSI-RS resource set list; or the fifth field is used to deactivate a third resource in the semi-persistent ZP CSI-RS resource set list, and the sixth field is used to deactivate a fourth resource in the semi-persistent ZP CSI-RS resource set list.

For example, the first resource set includes one aperiodic ZP CSI-RS resource set list, and the aperiodic ZP CSI-RS resource set list includes less than or equal to six or seven ZP CSI-RS resource sets. If the first resource and the second resource are included in the aperiodic ZP CSI-RS resource set list, the method further includes: sending a sixth message, where the sixth message includes a seventh field and an eighth field, the seventh field is used to trigger the first resource in the aperiodic ZP CSI-RS resource set list, and the eighth field is used to trigger the second resource in the aperiodic ZP CSI-RS resource set list.

For technical effects of the method shown in the second aspect and the possible designs of the second aspect, refer to the technical effects in the first aspect and the possible designs of the first aspect.

According to a third aspect, a communication method is provided. The method may be performed by a terminal device, or may be performed by a chip, a circuit, or the like. This is not limited in this application.

The communication method includes: receiving first indication information, where the first indication information indicates reception of a first signal on a first time-frequency resource; receiving second indication information, where the second indication information indicates a first ZP CSI-RS resource, and the first ZP CSI-RS resource is a time-frequency resource that is not used to receive the first signal in a non-SBFD time unit; receiving third indication information, where the third indication information indicates a second time-frequency resource, the second time-frequency resource is a subset of the first ZP CSI-RS resource, and the second time-frequency resource is a time-frequency resource that is not used to receive the first signal in an SBFD time unit; receiving, in the SBFD time unit, the first signal on a third time-frequency resource in the first time-frequency resource, where the third time-frequency resource is a time-frequency resource in the first time-frequency resource other than the second time-frequency resource; and receiving, in the non-SBFD time unit, the first signal on a fourth time-frequency resource in the first time-frequency resource, where the fourth time-frequency resource is a time-frequency resource in the first time-frequency resource other than the first ZP CSI-RS resource; and the first time-frequency resource overlaps the second time-frequency resource, and the first time-frequency resource overlaps a time-frequency resource in the first ZP CSI-RS resource other than the second time-frequency resource.

Based on the foregoing technical solution, an example in which an execution body is a terminal device is used. A network device sends the third indication information to the terminal device, to indicate the second time-frequency resource in the first ZP CSI-RS resource, and the second time-frequency resource cannot be used to send or receive a signal. Therefore, the terminal device may receive the first signal on the resource, in the first time-frequency resource that is used to receive the first signal and that is indicated by the first indication information, other than the second time-frequency resource. The second time-frequency resource is in the SBFD time unit, to configure needed resources in different time units in a scenario in which a channel environment and an interference environment in the SBFD time unit are different from a channel environment and an interference environment in the non-SBFD time unit. This improves resource configuration flexibility, and can determine, based on the configured resources, a time-frequency resource that cannot be used to receive or send a signal.

With reference to the third aspect, in some implementations of the third aspect, that the third indication information indicates the second time-frequency resource includes: the third indication information indicates at least one channel state information reference signal CSI-RS port, and the at least one CSI-RS port is associated with the second time-frequency resource.

With reference to the third aspect, in some implementations of the third aspect, that the third indication information indicates the second time-frequency resource includes: the third indication information indicates at least one code division multiplexing CDM group, and the at least one CDM group is associated with the second time-frequency resource.

With reference to the third aspect, in some implementations of the third aspect, that the third indication information indicates the second time-frequency resource includes: the third indication information indicates a number N of CSI-RS ports, and the N CSI-RS ports are associated with the second time-frequency resource.

With reference to the third aspect, in some implementations of the third aspect, if a codebook type is configured as single-panel, the codebook type is related to an antenna configuration of the network device, and indexes of the N CSI-RS ports include: $0 ∼ \frac{N}{2} - 1$ and $\left(0∼\frac{N}{2}-1\right) + M / 2$; or $M - \left(0∼\frac{N}{2}-1\right) - 1$ and M/2 - (0-N/2 - 1) - 1, where M indicates a total number of antenna ports of the network device.

With reference to the third aspect, in some implementations of the third aspect, if a codebook type is configured as dual-panel, the codebook type is related to an antenna configuration of the network device, and indexes of the N CSI-RS ports include: $0 ∼ \frac{N}{2} - 1$ and $M / 2 - \left(0∼\frac{N}{2}-1\right) - 1$ ; or $M - \left(0∼\frac{N}{2}-1\right) - 1$ and (0-N/2 - 1) + M/2, where M indicates a total number of antenna ports of the network device.

With reference to the third aspect, in some implementations of the third aspect, the third indication information is configured in the first ZP CSI-RS resource, and the third indication information indicates the second time-frequency resource in the first ZP CSI-RS resource; or the third indication information is configured in a first ZP CSI-RS resource set, and the third indication information indicates a second time-frequency resource in each ZP CSI-RS resource in the first ZP CSI-RS resource set; or the third indication information is configured in a first ZP CSI-RS resource set list, and the third indication information indicates a second time-frequency resource in each ZP CSI-RS resource in the first ZP CSI-RS resource set list; or the third indication information is configured in a PDSCH configuration or a CSI reporting resource setting, and the third indication information indicates a second time-frequency resource in each ZP CSI-RS resource in all ZP CSI-RS resource set lists.

Based on the foregoing technical solution, the third indication information may indicate the second time-frequency resource by indicating the CSI-RS port, the CDM group, or the number of CSI-RS ports, to improve flexibility of the solution.

According to a fourth aspect, a communication method is provided. The method may be performed by a network device, or may be performed by a chip, a circuit, or the like. This is not limited in this application.

The communication method includes: sending first indication information, where the first indication information indicates reception of a first signal on a first time-frequency resource; sending second indication information, where the second indication information indicates a first ZP CSI-RS resource, and the first ZP CSI-RS resource is a time-frequency resource that is not used to receive the first signal in a non-SBFD time unit; sending third indication information, where the third indication information indicates a second time-frequency resource, the second time-frequency resource is a subset of the first ZP CSI-RS resource, and the second time-frequency resource is a time-frequency resource that is not used to receive the first signal in an SBFD time unit; sending, in the SBFD time unit, the first signal on a third time-frequency resource in the first time-frequency resource, where the third time-frequency resource is a time-frequency resource in the first time-frequency resource other than the second time-frequency resource; and sending, in the non-SBFD time unit, the first signal on a fourth time-frequency resource in the first time-frequency resource, where the fourth time-frequency resource is a time-frequency resource in the first time-frequency resource other than the first ZP CSI-RS resource; and the first time-frequency resource overlaps the second time-frequency resource, and the first time-frequency resource overlaps a time-frequency resource in the first ZP CSI-RS resource other than the second time-frequency resource.

Specifically, for descriptions related to the third indication information, refer to the descriptions about the third indication information in the third aspect. Details are not described herein again.

For technical effects of the method shown in the fourth aspect and the possible designs of the fourth aspect, refer to the technical effects in the third aspect and the possible designs of the third aspect.

According to a fifth aspect, a communication apparatus is provided. The communication apparatus is configured to perform any one of the first aspect, the third aspect, and the implementations of the first aspect and the third aspect. Specifically, the communication apparatus includes a processor and a memory. The memory is configured to store a computer program. The processor is configured to invoke the computer program from the memory and run the computer program, so that the communication apparatus performs any one of the first aspect, the third aspect, and the implementations of the first aspect and the third aspect.

In an implementation, the communication apparatus is a terminal device. When the communication apparatus is a terminal device, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus may be a chip, a chip system, or a circuit in a terminal device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The communication apparatus is configured to perform any one of the second aspect, the fourth aspect, and the implementations of the second aspect and the fourth aspect. Specifically, the communication apparatus includes a processor and a memory. The memory is configured to store a computer program. The processor is configured to invoke the computer program from the memory and run the computer program, so that the communication apparatus performs any one of the second aspect, the fourth aspect, and the implementations of the second aspect and the fourth aspect.

In an implementation, the communication apparatus is a network device. When the communication apparatus is a network device, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus may be a chip, a chip system, or a circuit in a network device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a seventh aspect, a computer-readable storage medium is provided. The computer-readable storage medium stores a computer program, and when the computer program is run, the method in any one of the first aspect to the fourth aspect is performed.

According to an eighth aspect, a computer program product including instructions is provided. When the computer program product runs, the method provided in any one of the implementations of the first aspect to the fourth aspect is performed.

According to a ninth aspect, a chip is provided. The chip includes a processor and a communication interface. The processor reads instructions through the communication interface, to perform the method provided in any one of the implementations of the first aspect to the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect to the fourth aspect.

According to a tenth aspect, a communication system is provided, including the communication apparatus in the fifth aspect and the communication apparatus in the sixth aspect.

According to an eleventh aspect, a computer program is provided. When the computer program is run, the method provided in any one of the implementations of the first aspect to the fourth aspect is performed.

### BRIEF DESCRIPTION OF DRAWINGS

FIG. 1 is a diagram of a communication system applicable to this application;
FIG. 2a to FIG. 2d are diagrams of time domain resource division;
FIG. 3a to FIG. 3c are diagrams of antenna configurations;
FIG. 4 is a diagram of time-frequency resource allocation of a CSI-RS in one RB;
FIG. 5 is a diagram of a spatial location of a CSI-RS port;
FIG. 6 is a diagram of a signaling structure of a MAC CE;
FIG. 7 is a schematic flowchart of a communication method according to an embodiment of this application;
FIG. 8a to FIG. 8d are diagrams of activation/deactivation messages according to an embodiment of this application;
FIG. 9 is a schematic flowchart of another communication method according to an embodiment of this application;
FIG. 10 is a diagram of a second time-frequency resource according to an embodiment of this application;
FIG. 11 is a diagram of a CSI-RS port according to an embodiment of this application;
FIG. 12 is a block diagram of a communication apparatus according to an embodiment of this application;
FIG. 13 is a diagram of another communication apparatus according to an embodiment of this application; and
FIG. 14 is a diagram of a chip system according to an embodiment of this application.

### DESCRIPTION OF EMBODIMENTS

For ease of understanding of embodiments of this application, the following descriptions are provided.

First, in this application, "indicating" may include "directly indicating" and "indirectly indicating". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-side device by sending configuration information to a receive-side device. The configuration information may be but is not limited to one or a combination of at least two of radio resource control (radio resource control, RRC) signaling, medium access control (Medium Access Control, MAC) layer signaling, and physical layer signaling. The MAC layer signaling includes, for example, a MAC control element (control element, CE), and the physical layer signaling includes, for example, downlink control information (downlink control information, DCI).

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, words such as "710" and "720" are merely identifiers for ease of description, and do not limit a sequence of performing steps.

Third, in this application, a term like "example" or "for example" represents giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

Fourth, "store" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference between the three is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining, in an existing or future protocol, another term that can implement a same or similar function.

Eighth, a term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The following describes the technical solutions in embodiments of this application in detail with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applicable to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

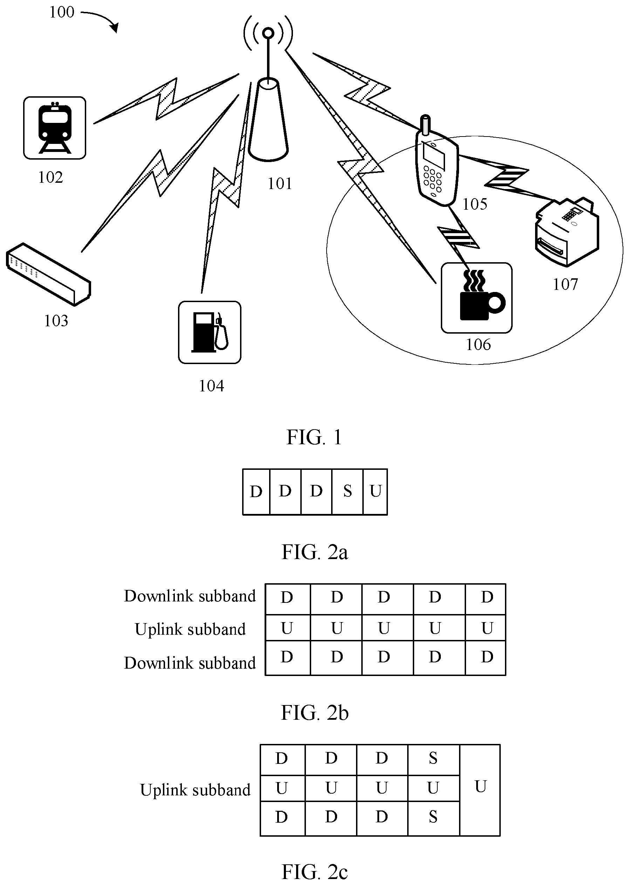

For ease of understanding embodiments of this application, for example, a communication system applicable to this application is first described with reference to FIG. 1. A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in embodiments of this application.

For example, in embodiments of this application, the wearable device may also be referred to as a wearable intelligent device or the like, and is a general term of wearable devices that are intelligently designed and developed for daily wear by using a wearable technology, such as glasses, gloves, watches, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes a full-featured device that may implement complete or partial functions without depending on a smartphone, for example, a smartwatch or smart glasses. In addition, the device may alternatively be a portable device that is dedicated to only one type of application function and needs to be used together with another device such as a smartphone, for example, various smart bands or smart jewelry for monitoring physical signs.

In addition, in embodiments of this application, the terminal device may alternatively be a terminal device in an IoT system. IoT is an important part in future development of the information technology. A main technical feature of the IoT is to connect things to a network by using a communication technology, to implement an intelligent network for human-machine interconnection and thing-thing interconnection. In embodiments of this application, an IoT technology may implement massive connections, deep coverage, and terminal power saving by using, for example, a narrowband (narrowband, NB) technology.

In addition, in embodiments of this application, the terminal device may alternatively include a sensor. Main functions include collecting data (some terminal devices), receiving control information and downlink data from a network device, sending an electromagnetic wave, and transmitting uplink data to the network device.

A network device in embodiments of this application may be any communication device that has a wireless transceiver function and that is configured to communicate with the terminal device. The device includes but is not limited to: an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseband unit, BBU), or an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system, or may be a gNB or a transmission point (TRP or TP) in a 5G system such as an NR system, or one antenna panel or a group of antenna panels (including a plurality of antenna panels) of a base station in a 5G system, or may be a network node that forms a gNB or a transmission point, for example, a baseband unit (BBU) or a distributed unit (distributed unit, DU).

In different systems, the CU (or the CU-CP and the CU-UP), the DU, or the RU may alternatively have different names, but a person skilled in the art may understand meanings thereof. For example, the radio access network may alternatively be an open radio access network (open radio access network, O-RAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

The network device and the terminal device may be deployed on land, including an indoor or outdoor device, a hand-held device, or a vehicle-mounted device; may be deployed on water; or may be deployed on an airplane, a balloon, and a satellite in the air. Scenarios in which the network device and the terminal device are located are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux^{®} operating system, a Unix^{®} operating system, an Android^{®} operating system, an iOS^{®} operating system, or a Windows^{®} operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium includes but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

For ease of understanding embodiments of this application, a communication system shown in FIG. 1 is first used as an example to describe in detail a communication system applicable to embodiments of this application. As shown in FIG. 1, a communication system 100 may include at least one network device 101 and at least one of terminal devices 102 to 107. The terminal devices 102 to 107 may be mobile or fixed. The network device 101 may communicate with one or more of the terminal devices 102 to 107 through a wireless link. Each network device may provide communication coverage for a particular geographical area, and may communicate with a terminal device located in the coverage area.

Optionally, the terminal devices may directly communicate with each other. For example, direct communication between the terminal devices may be implemented by using a device-to-device (device-to-device, D2D) technology. As shown in FIG. 1, direct communication may be implemented between the terminal devices 105 and 106 and between the terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101, for example, may directly communicate with the network device 101; for example, the terminal devices 105 and 106 in the figure may directly communicate with the network device 101; or may indirectly communicate with the network device 101. For example, the terminal device 107 in FIG. 1 communicates with the network device 101 via the terminal device 105.

A plurality of antennas may be configured for each communication device. For each communication device in the communication system 100, the plurality of antennas configured may include at least one transmit antenna configured to send a signal and at least one receive antenna configured to receive a signal. Therefore, the communication devices in the communication system 100 may communicate with each other by using a multi-antenna technology.

An interface between the network device and the terminal device may be a Uu interface (also referred to as an air interface). Certainly, in future communication, names of these interfaces may remain unchanged, or may be other names. This is not limited in this application. For example, communication between the network device and the terminal device complies with a specific protocol layer structure. Network layering means that work of network nodes (for example, the network device and the terminal device) such as sending, forwarding, packaging, or unpacking data, and loading or unpacking control information is implemented by different hardware and software modules. In this way, a complex problem of communication and network interconnection can be simplified.

It should be understood that FIG. 1 is merely a simplified diagram of an example for ease of understanding. The communication system 100 may further include another network device or may further include another terminal device (not shown in FIG. 1). For example, the communication system 100 may further include a core network device. An access network device provides a radio access connection for the terminal device, and may send data to the terminal device or receive data sent by the terminal device. In addition, the access network device is also connected to the core network device, and may forward, to a core network, the data received from the terminal device, or receive, from a core network, data that needs to be sent to the terminal device.

For example, the communication system 100 may further include an application function (application function, AF) network element. The AF network element is a control plane network function provided by an operator network, and is configured to provide application layer information. The communication system 100 may further include a session management function (session management function, SMF) network element. The SMF is a control plane network function provided by the operator network. In this embodiment of this application, when the communication system 100 includes the AF network element and the SMF network element, the AF may send service-related information to the network device via the SMF.

For ease of understanding embodiments of this application, some basic concepts in this application are briefly described. It should be understood that the basic concepts described below are described by using basic concepts specified in an NR protocol as an example, but embodiments of this application are not limited to being applied only to the NR system. Therefore, standard names appearing when the NR system is used as an example for description are all functional descriptions, and specific names are not limited, indicate only functions of a device, and may be correspondingly extended to another future system.

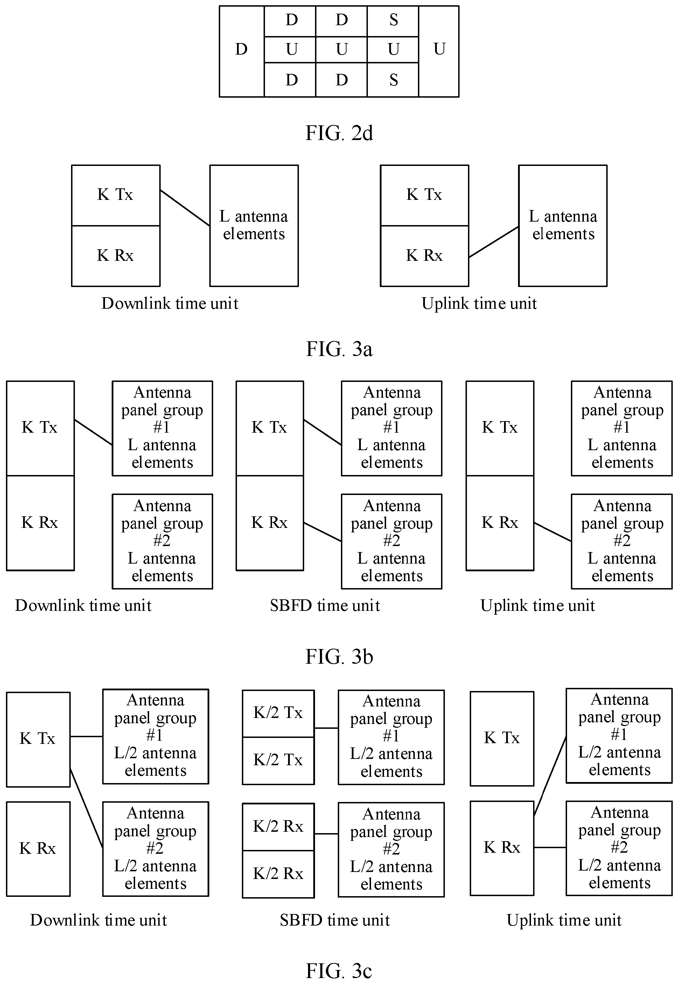

1. Time division duplex (time division duplex, TDD): is widely applied to deployment of 5G wireless communication systems. In TDD, time domain resources are classified into uplink and downlink resources. For example, a possible TDD uplink/downlink configuration is a DDDSU, as shown in FIG. 2a, D represents a downlink (downlink) slot, each symbol in the downlink slot is a downlink symbol, U represents an uplink (uplink) slot, each symbol in the uplink slot is an uplink symbol, S is a special (special) slot, and the special slot includes at least a flexible symbol. Limited allocation of uplink time domain resources results in a reduction in uplink coverage and an increase in a delay in TDD.

For example, a possible method for enhancing uplink coverage is to use subband full duplex (subband full duplex, SBFD). SBFD includes subband overlapping full duplex (subband overlapping full duplex) and subband non-overlapping full duplex (subband non-overlapping full duplex).

Specifically, SBFD may be understood as dividing a frequency band on the downlink symbol and/or the flexible symbol into one or more uplink subbands and one or more downlink subbands, and allowing uplink sending on the uplink subband of the downlink symbol. The subband (also referred to as an SBFD subband) obtained through division may be understood as including one RB or a group of contiguous RBs that are used for a same transmission direction.

Compared with TDD, SBFD has more uplink resources to improve uplink coverage performance and has more slots as uplink resources for hybrid automatic repeat request-acknowledgment (hybrid automatic repeat request-acknowledgment, HARQ-ACK) feedback to reduce a delay.

Currently, a base station supports full duplex (full duplex, FD) SBFD, that is, sending may be performed in an uplink subband and receiving may be performed in a downlink subband at the same time in one slot. UE supports half duplex (half duplex, HF) SBFD, that is, sending can be performed only in an uplink subband or receiving can be performed only in a downlink subband in one slot.

For convenience, a symbol on which both an uplink subband and a downlink subband are obtained through division in the frequency band is referred to as an SBFD symbol, and is denoted as X (used to distinguish between D, U, and S). In this case, uplink/downlink configurations dedicated to SBFD generally include the following three types: XXXXX, XXXXU, and DXXXU, as shown in FIG. 2b to FIG. 2d. The SBFD symbol may be understood as a symbol having a subband used by the network device for an SBFD operation. The SBFD symbol may also be referred to as an SBFD time unit. A non-SBFD time unit includes an uplink time unit, a downlink time unit, and/or a flexible time unit (for example, a U slot, a D slot, or an S slot shown in FIG. 2a above).

It should be noted that a time unit in this application may be a slot, a symbol, or another time domain range in time domain. This is not limited herein. For example, the SBFD time unit may be an SBFD slot. Optionally, a slot including an SBFD symbol may be referred to as an SBFD slot. For example, the SBFD slot includes only an SBFD symbol, or the SBFD slot includes at least one SBFD symbol. For another example, the non-SBFD time unit may be a non-SBFD slot. Optionally, a slot that does not include an SBFD symbol may be referred to as a non-SBFD slot.

2. Antenna configuration: An antenna configuration on a TDD network device side is shown in FIG. 3a. The TDD network device side shares one antenna panel (antenna array) for transmission and reception. It is assumed that a total number of antenna elements is L (L antenna elements shown in FIG. 3a), and a number of transmitting units (transmitting unit, Tx) and a number of receiving units (receiving unit, Rx) are K (K Tx and K Rx shown in FIG. 3a).

In a downlink time unit (for example, a downlink slot or symbol), K transmit Tx is connected to the antenna panel. In an uplink time unit, K receive Rx is connected to the antenna panel. A number of units used for transmission and reception is consistent with the number of antenna elements.

There are two types of antenna configurations on an SBFD network device side.

A first-type antenna configuration on the SBFD network device side is shown in FIG. 3b, and includes two antenna panel groups (an antenna panel group #1 and an antenna panel group #2 shown in FIG. 3b). Each antenna panel group includes L antenna elements, and K transmit Tx and K receive Rx exist. In a downlink time unit, K transmit Tx is connected to one antenna panel group. In an uplink time unit, K receive Rx is connected to the other antenna panel. In an SBFD time unit, K transmit Tx is connected to one the antenna panel, and K receive Rx is connected to the other antenna panel. In this type of SBFD antenna configuration, one antenna panel group is added to ensure that a number of transmitting units and receiving units in the SBFD time unit is the same as that in the non-SBFD time unit.

A second-type antenna configuration on the SBFD network device side is shown in FIG. 3c, and includes two antenna panel groups. Each antenna panel group includes L/2 antenna elements, and K transmit Tx and K receive Rx exist. In a downlink time unit, K transmit Tx is connected to the two antenna panel groups. In an uplink time unit, K receive Rx is connected to two antenna panels. In an SBFD time unit, K/2 transmit Tx is connected to one antenna panel, and K/2 receive Rx is connected to the other antenna panel. In this type of SBFD antenna configuration, a number of transmitting units and receiving units in the SBFD time unit is different from that in the non-SBFD time unit.

3. Channel state information (channel state information, CSI) measurement: A network device needs to learn of CSI between the network device and a terminal device, to help the network device perform downlink scheduling and downlink adaptation, and determine a transmission setting related to a multiple-input multiple-output (multiple-input multiple-output, MIMO) technology.

For example, a method for obtaining the CSI by the network device is as follows: The network device sends a channel state information reference signal (channel state information reference signal, CSI-RS) to the terminal device, and the terminal device receives and measures the CSI-RS to obtain the CSI, and then reports the CSI to the network device.

It should be noted that a channel environment and an interference environment in the SBFD time unit are different from a channel environment and an interference environment in the downlink (or flexible) time unit, and the terminal device needs to separately measure and report CSI in the SBFD time unit and CSI in the downlink (or flexible) time unit. This may be attributable to various reasons, including:
(1) The network device uses the second-type antenna configuration on the SBFD network device side, that is, a number of transmit antenna ports of the network device in the SBFD time unit is different from a number of transmit antenna ports of the network device in the downlink (or flexible) time unit. Therefore, a downlink channel in the SBFD time unit is different from a downlink channel in the downlink (or flexible) time unit.
(2) In the SBFD time unit, some terminal devices receive downlink signals, and some terminal devices send uplink signals. Consequently, the terminal devices suffer severe cross-link interference (cross-link interference, CLI), that is, interference from an uplink to a downlink. However, in the downlink time unit, all terminal devices receive downlink signals. Therefore, the terminal devices are not affected by the CLI.

4. Resource configuration: To enable the terminal device to measure and report the CSI in the SBFD time unit and the CSI in the downlink (or flexible) time unit, the network device may configure two sets of non-zero-power CSI-RS (non-zero-power CSI-RS, NZP CSI-RS) resources for the terminal device, to be used for channel measurement in the SBFD time unit and the downlink (or flexible) time unit respectively. Optionally, the network device further configures two sets of NZP CSI-RS resources and/or two sets of CSI interference measurement (CSI interference measurement, CSI-IM) resources for the terminal device, to be used for NZP CSI-RS-based interference measurement and/or CSI-IM-based interference measurement in the SBFD time unit and the downlink (or flexible) time unit respectively.

If the network device uses the second-type antenna configuration on the SBFD network device side, the foregoing two sets of NZP CSI-RS resource configurations used for channel measurement are different. For example, the foregoing two sets of NZP CSI-RS resources used for channel measurement have different numbers of ports and different time-frequency resources. Based on the second-type antenna configuration on the SBFD network device side, numbers of antenna ports used by the network device in the SBFD time unit and the downlink (or flexible) time unit are different. Therefore, numbers of ports used by the network device to send a CSI-RS in the SBFD time unit and the downlink (or flexible) time unit are also different. Further, a time-frequency resource used for the CSI-RS is related to a number of CSI-RS ports. As a result, time-frequency resources used by the network device to send the CSI-RS in the SBFD time unit and the downlink (or flexible) time unit are also different. For details, refer to Background. Similarly, the foregoing two sets of NZP CSI-RS resource configurations used for interference measurement are also different.

Finally, to enable the terminal device to perform CSI measurement on the NZP CSI-RS resource and the CSI-IM resource, the network device cannot send a physical downlink shared channel (physical downlink shared channel, PDSCH) on these resources. In other words, when sending the PDSCH, the network device performs rate matching based on these resources. Similarly, the terminal device cannot receive the PDSCH on these resources. Therefore, the network device configures a zero-power CSI-RS (zero-power CSI-RS, ZP CSI-RS) resource for the terminal device. The ZP CSI-RS resource can cover, in time domain and frequency domain, the NZP CSI-RS resource and the CSI-IM resource used for channel measurement and interference measurement. The network device configures the ZP CSI-RS resource for the terminal device, to notify the terminal device that the network device does not send the PDSCH on the ZP CSI-RS resource. After receiving the ZP CSI-RS resource, the terminal device does not receive the PDSCH on the ZP CSI-RS resource.

5. CSI-RS resource: A CSI-RS resource configuration method is provided in a current protocol (for example, TS 38.211), and is summarized as follows:

For any CSI-RS, UE maps a CSI-RS sequence r(m) to a resource element (resource element, RE) (k, l)_{p,µ} according to the following formula: ${a}_{k , l}^{\left(p, μ\right)} = {β}_{CSIRS} {w}_{f} \left(k′\right) ⋅ {w}_{t} \left(l′\right) ⋅ {r}_{l {, n}_{s , f}} \left(m′\right)$ $m ′ = \left⌊nα\right⌋ + k ′ + \left⌊\frac{\overline{k} ρ}{{N}_{SC}^{RB}}\right⌋$ $k = {nN}_{SC}^{RB} + \overline{k} + k ′$$l = \overline{l} + l ′$ $\begin{matrix} \\ a = \left\{\begin{matrix}ρ & for X = 1 \\ 2 ρ & for X > 1\end{matrix}\right.\end{matrix}$ $n = 0 , 1 , …$

The RE (k, l)_{p,µ} is in a resource block (resource block, RB) used for the CSI-RS, and is configured by the network device for the user equipment. Parameters in the formula are described as follows:${n}_{s , f}^{μ}$ (or denoted as n_{s,f}) represents a slot number of a slot in which the CSI-RS is located in a system frame.

k represents a subcarrier index, and k = 0 represents a subcarrier 0 in a common resource block (common resource block, CRB) 0.

1 represents an index of an OFDM symbol in one slot. If one slot includes 14 OFDM symbols, l = 0,1, ...,13.${N}_{sc}^{RB}$ represents a number of subcarriers in one RB, and is usually ${N}_{sc}^{RB} = 12$.

ρ represents a density of the CSI-RS in frequency domain, and is provided by a density (density) field in an RRC information element CSI-RS resource mapping (CSI-RS-ResourceMapping), where an information element specifically included in CSI-RS-ResourceMapping is not described in detail herein, and reference is made to descriptions of the CSI-RS-ResourceMapping field in the current protocol.

It should be understood that in a configured CSI-RS bandwidth, one CSI-RS may be configured for each RB, and this mode is referred to as a CSI-RS density of 1. Alternatively, one CSI-RS may be configured at an interval of one RB, and this mode is referred to as a CSI-RS density of 0.5. When the density is 0.5, CSI-RS configuration information indicates a specific RB (an RB corresponding to an odd index or an even index) in two RBs to carry the CSI-RS.

X represents a number of CSI-RS ports, and is indicated by a port number (nrofPorts) field in the RRC information element CSI-RS-ResourceMapping.

β_{CSIRS} represents a power control parameter, and is determined based on a power control (powerControlOffsetSS) field in an RRC information element NZP-CSI-RS-Resource.

k', 1', w_{f}(k'), and wₜ(l') are shown in Table 1 to Table 5, a code division multiplexing (code division multiplexing, CDM) type in Table 1 is indicated by a field cdm-Type in the RRC information element CSI-RS-ResourceMapping. k' and w_{f}(k') represent frequency-domain orthogonal cover code (orthogonal cover code, OCC) used for one CDM group, and l' and wₜ(l') represent time-domain OCC used for one CDM group.

**Table 1: Locations within a slot of a CSI-RS (locations within a slot)**

| Row (Row) | Ports *X* | Density (density) *ρ* | CDM type (cdm-Type) | (*k̅,l̅*) | CDM group index (CDM group index) *j* | *k'* | *l'* |
|---|---|---|---|---|---|---|---|
| 1 | 1 | 3 | noCDM | (k₀, l₀), (k₀ + 4, l₀), (k₀ + 8, l₀) | 0,0,0 | 0 | 0 |
| 2 | 1 | 1, 0.5 | noCDM | (k₀, l₀), | 0 | 0 | 0 |
| 3 | 2 | 1, 0.5 | fd-CDM2 | (k₀, l₀), | 0 | 0, 1 | 0 |
| 4 | 4 | 1 | fd-CDM2 | (k₀, l₀), (k₀ + 2, l₀) | 0, 1 | 0, 1 | 0 |
| 5 | 4 | 1 | fd-CDM2 | (k₀, l₀), (k₀, l₀ + 1) | 0, 1 | 0, 1 | 0 |
| 6 | 8 | 1 | fd-CDM2 | (k₀, l₀), (k₁, l₀), (k₂, l₀), (k₃, l₀) | 0, 1, 2,3 | 0, 1 | 0 |
| 7 | 8 | 1 | fd-CDM2 | (k₀, l₀), (k₁, l₀), (k₀, l₀ + 1), (k₁, l₀ + 1) | 0, 1, 2,3 | 0, 1 | 0 |
| 8 | 8 | 1 | cdm4-FD2-TD2 | (k₀, l₀), (k₁, l₀) | 0, 1 | 0, 1 | 0, 1 |
| 9 | 12 | 1 | fd-CDM2 | (k₀, l₀), (k₁, l₀), (k₂, l₀), (k₃, l₀), (k₄, l₀), (k₅, l₀) | 0, 1, 2, 3, 4, 5 | 0, 1 | 0 |
| 10 | 12 | 1 | cdm4-FD2-TD2 | (k₀, l₀), (k₁, l₀), (k₂, l₀) | 0, 1, 2 | 0, 1 | 0, 1 |
| 11 | 16 | 1, 0.5 | fd-CDM2 | (k₀, l₀), (k₁, l₀), (k₂, l₀), (k₃, l₀), (k₀, l₀ + 1), (k₁, l₀ + 1), (k₂, l₀ + 1), (k₃, l₀ + 1) | 0, 1, 2, 3, 4, 5, 6,7 | 0, 1 | 0 |
| 12 | 16 | 1, 0.5 | cdm4-FD2-TD2 | (k₀, l₀), (k₁, l₀), (k₂, l₀), (k₃, l₀) | 0, 1, 2,3 | 0, 1 | 0, 1 |
| 13 | 24 | 1, 0.5 | fd-CDM2 | (k₀, l₀), (k₁, l₀), (k₂, l₀), (k₀, l₀ + 1), (k₁, l₀ + 1), (k₂, l₀ + 1), (k₀, l₁), (k₁, l₁), (k₂, l₁), (k₀, l₁ + 1), (k₁, l₁ + 1), (k₂, l₁ + 1) | 0, 1, 2, 3, 4, 5, 6, 7, 8, 9, 10, 11 | 0, 1 | 0 |
| 14 | 24 | 1, 0.5 | cdm4-FD2-TD2 | (k₀, l₀), (k₁, l₀), (k₂, l₀), (k₀, l₁), (k₁, l₁), (k₂, l₁) | 0, 1, 2, 3, 4, 5 | 0, 1 | 0, 1 |
| 15 | 24 | 1, 0.5 | cdm8-FD2-TD4 | (k₀, l₀), (k₁, l₀), (k₂, l₀) | 0, 1, 2 | 0, 1 | 0, 1, 2, 3 |
| 16 | 32 | 1, 0.5 | fd-CDM2 | (k₀, l₀), (k₁, l₀), (k₂, l₀), (k₃, l₀), (k₀, l₀ + 1), (k₁, l₀ + 1), (k₂, l₀ + 1), (k₃, l₀ + 1), (k₀, l₁), (k₁, l₁), (k₂, l₁), (k₃, l₁), (k₀, l₁ + 1), (k₁, l₁ + 1), (k₂, l₁ + 1), (k₃, l₁ + 1) | 0, 1, 2, 3, 4, 5, 6, 7, 8, 9, 10, 11, 12, 13, 14, 15 | 0, 1 | 0 |
| 17 | 32 | 1, 0.5 | cdm4-FD2-TD2 | (k₀, l₀), (k₁, l₀), (k₂, l₀), (k₃, l₀), (k₀, l₁), (k₁, l₁), (k₂, l₁), (k₃, l₁) | 0, 1, 2, 3, 4, 5, 6, 7 | 0, 1 | 0, 1 |
| 18 | 32 | 1, 0.5 | cdm8-FD2-TD4 | (k₀, l₀), (k₁, l₀), (k₂, l₀), (k₃, l₀) | 0, 1, 2, 3 | 0, 1 | 0, 1, 2, 3 |

**Table 2: Sequences w_{f} (k') and wₜ (l') corresponding to a CDM type 'noCDM'**

| Index (index) | **w_{f}(0)** | **wₜ(0)** |
|---|---|---|
| 0 | 1 | 1 |

**Table 3: Sequences w_{f} (k') and wₜ (l') corresponding to a CDM type 'fd-CDM2'**

| Index (index) | [**w**_{f}(**0**) **w**_{f}(**1**)] | **w**ₜ(**0**) |
|---|---|---|
| 0 | [+1 +1] | 1 |
| 1 | [+1 -1] | 1 |

**Table 4: Sequences w_{f} (k') and wₜ (l') corresponding to a CDM type 'cdm4-FD2-TD2'**

| Index (index) | [**w**_{f}(**0**) **w**_{f}(**1**)] | [**w**ₜ(**0**) **w**ₜ(**1**)] |
|---|---|---|
| 0 | [+1 +1] | [+1 +1] |
| 1 | [+1 -1] | [+1 +1] |
| 2 | [+1 +1] | [+1 -1] |
| 3 | [+1 -1] | [+1 -1] |

**Table 5: Sequences w_{f} (k') and wₜ (l') corresponding to a CDM type 'cdm8-FD2-TD4'**

| Index (index) | [***w***_{f}(**0**) ***w***_{f}(**1**)] | [***w***ₜ(**0**) ***w***ₜ(**1**) ***w***ₜ(**2**) ***w***ₜ(**3**)] |
|---|---|---|
| 0 | [+1 +1] | [+1 +1 +1 +1] |
| 1 | [+1 -1] | [+1 +1 +1 +1] |
| 2 | [+1 +1] | [+1 -1 +1 -1] |
| 3 | [+1 -1] | [+1 -1 +1 -1] |
| 4 | [+1 +1] | [+1 +1 -1 -1] |
| 5 | [+1 -1] | [+1 +1 -1 -1] |
| 6 | [+1 +1] | [+1 -1 -1 +1] |
| 7 | [+1 -1] | [+1 -1 -1 +1] |

Time domain positions *l*₀ ∈ [0,1, ..., 13} and *l*₁ ∈ {2, 3, ..., 12} in Table 1 are indicated by a field firstOFDMSymbolInTimeDomain and a field firstOFDMSymbolInTimeDomain2 in the RRC information element CSI-RS-ResourceMapping.

A frequency domain position *kᵢ* in Table 1 is determined based on a field frequencyDomainAllocation in the RRC information element CSI-RS-ResourceMapping. The field indicates *kᵢ* in a form of a bitmap.

An antenna port number *p* is determined according to the following formula: $p = 3000 + s + jL ;$ $j = 0 , 1 , … , N / L - 1$ $s = 0 , 1 , … , L - 1 ;$

*s* represents an index of OCC used in one CDM group in Table 2 to Table 5, *L* ∈ {1,2,4,8} represents a size of the CDM group, and *N* represents a number of CSI-RS ports. CDM groups are numbered in an order of frequency domain first and then time domain. It should be understood that CSI-RS ports are counted in an order of code domain → frequency domain → time domain.

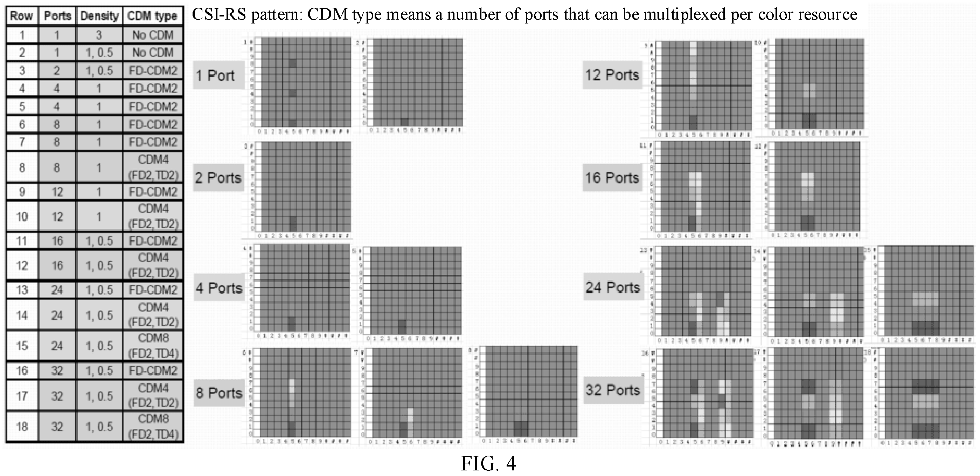

In conclusion, according to the foregoing formula and the CSI-RS resource configuration method in Table 1, FIG. 4 shows an example of time-frequency resource allocation of a CSI-RS in one RB. It can be learned from FIG. 4 that the CDM type indicates a number of ports that can be multiplexed per resource of a different depth color.

The following describes RBs (start position and number) and slots (slot offset and repetition periodicity) used for the CSI-RS.

The RBs used by the UE to transmit the CSI-RS are provided by a freqBand and a field density in the RRC information element CSI-RS-ResourceMapping, where freqBand indicates a frequency bandwidth used for the CSI-RS, including a start RB and a number N of RBs, that is, the frequency bandwidth used for the CSI-RS is N contiguous RBs starting from the start RB, and the start RB and the number N of RBs use a bandwidth part (Bandwidth Part, BWP) as a reference.

A periodic (periodic) CSI-RS and a semi-persistent (semi-persistent) CSI-RS is, for example, indicated by a field resourceType in an RRC information element CSI-ResouceConfig, the network device repeatedly sends the CSI-RS in time, and the terminal device also repeatedly receives the CSI-RS in time. The repetition periodicity and the slot offset are indicated by a field CSI-ResourcePeriodicityAndOffset in an RRC information element NZP-CSI-RS-Resource.

A same RE pattern is used for the CSI-RS on each RB in each slot.

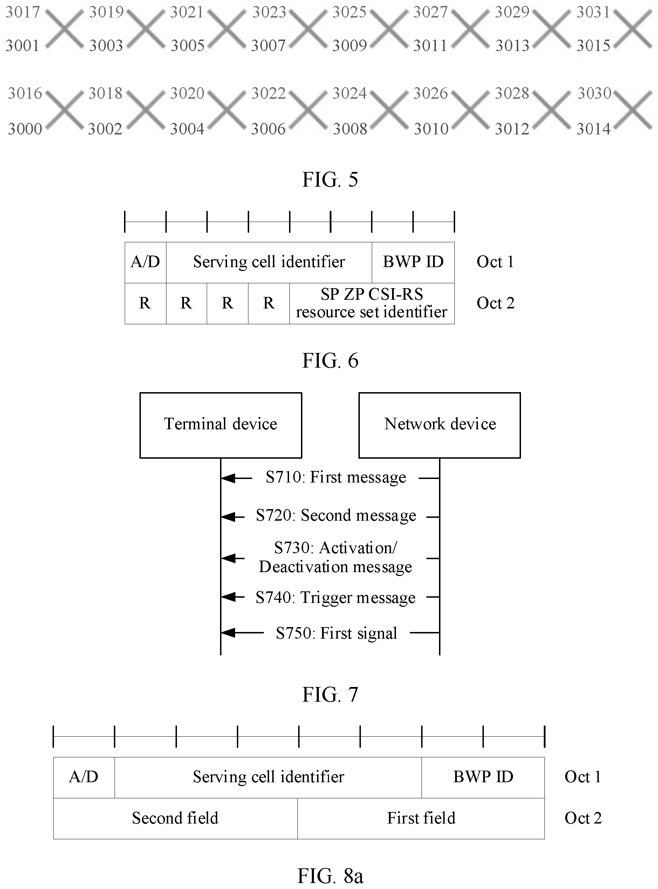

For example, a spatial position of a CSI-RS port is shown in FIG. 5. FIG. 5 shows a case in which a downlink antenna configuration of a network device is single-panel. N₁ represents a number of antenna elements in one polarization direction in a horizontal direction, N₂ represents a number of antenna elements in one polarization direction in a vertical direction, and N₁ represents a number of antenna panels. CSI-RS ports are arranged in space in an order of first vertical direction, then horizontal direction, then polarization direction, and finally antenna panel. Currently, spatial positions corresponding to different numbers of CSI-RS ports supported by the protocol are shown in Table 6 (single-panel) and Table 7 (multi-panel).

**Table 6: Supported configuration (N₁, N₂)**

| Number of CSI-RS antenna ports (Number of CSI-RS antenna ports, *P*_{CSI-RS}) | (*N*₁, *N*₂) |
|---|---|
| 4 | (2, 1) |
| 8 | (2, 2) |
| | (4, 1) |
| 12 | (3, 2) |
| | (6, 1) |
| 16 | (4, 2) |
| | (8, 1) |
| 24 | (4, 3) |
| | (6, 2) |
| | (12, 1) |
| 32 | (4, 4) |
| | (8, 2) |
| | (16, 1) |

**Table 7: Supported configuration (N_{g},N₁,N₂)**

| Number of CSI-RS antenna ports (Number of CSI-RS antenna ports, *P*_{CSI-RS}) | (*N_{g},N*₁,*N*₂) |
|---|---|
| 8 | (2, 2, 1) |
| 16 | (2, 4, 1) |
| | (4, 2, 1) |
| | (2, 2, 2) |
| 32 | (2, 8, 1) |
| | (4, 4, 1) |
| | (2, 4, 2) |
| | (4, 2, 2) |

6. ZP CSI-RS resource type: ZP CSI-RS resources are classified into three time domain behaviors: aperiodic, semi-persistent, and periodic. For each time domain behavior, the network device configures one or more ZP CSI-RS resource sets (higher layer information element: ZP-CSI-RS-ResourceSet). For example, the network device configures the following by using higher layer signaling:
an aperiodic ZP CSI-RS resource set list (higher layer information element: aperiodic-ZP-CSI-RS-ResourceSetsToAddModList), where
one aperiodic ZP CSI-RS resource set list includes a maximum of three ZP CSI-RS resource sets (higher layer information element: ZP-CSI-RS-Resource);
a semi-persistent ZP CSI-RS resource set list (higher layer information element: sp-ZP-CSI-RS-ResourceSetsToAddModList), where
one semi-persistent ZP CSI-RS resource set list includes a maximum of 16 ZP CSI-RS resource sets; and
a periodic ZP CSI-RS resource set (higher layer information element: p-ZP-CSI-RS-ResourceSet); and it should be understood that the network device configures only one periodic ZP CSI-RS resource set for the terminal device.

Each ZP CSI-RS resource set includes a maximum of 16 ZP CSI-RS resources.

A same time-frequency resource configuration method is used for the ZP CSI-RS resource and the NZP CSI-RS resource, that is, the higher layer information element CSI-RS-ResourceMapping and the higher layer information element periodicityAndOffset. This helps ensure that a time-frequency resource of the ZP CSI-RS covers a time-frequency resource of the NZP CSI-RS.

For a periodic ZP CSI-RS resource, after the network device configures one periodic ZP CSI-RS resource set for the terminal device, and the periodic ZP CSI-RS resource takes effect immediately.

For a semi-persistent ZP CSI-RS resource, the network device configures one semi-persistent ZP CSI-RS resource set list for the terminal device, including a maximum of 16 ZP CSI-RS resource sets. Then, the network device sends a semi-persistent (Semi-persistent, SP) ZP CSI-RS resource set activation/deactivation MAC CE, that is, an SP ZP CSI-RS Resource Set Activation/Deactivation MAC CE, to the terminal device, to indicate to activate/deactivate a semi-persistent ZP CSI-RS resource set in the semi-persistent ZP CSI-RS resource set list.

A signaling structure of the SP ZP CSI-RS Resource Set Activation/Deactivation MAC CE is shown in FIG. 6. Information included in the MAC CE is explained as follows:

A/D: indicates whether to activate or deactivate an indicated SP ZP CSI-RS resource set, and a length is 1 bit, where '1' indicates activation, and '0' indicates deactivation.

Serving cell identifier (serving cell identifier, serving cell ID): indicates a serving cell associated with the MAC CE, and a length is 5 bits.

Bandwidth part identifier (bandwidth part identifier, BWP ID): indicates a downlink BWP associated with the MAC CE, and a length is 2 bits.

SP ZP CSI-RS resource set identifier (SP ZP CSI-RS resource set ID): indicates an ID of an activated/deactivated SP ZP CSI-RS resource set, and a length is 4 bits.

R: indicates a reserved bit, and is set to 0.

For an aperiodic CSI-RS resource set, the network device configures one aperiodic ZP CSI-RS resource set list for the terminal device, including a maximum of three ZP CSI-RS resource sets. Then, the network device sends DCI to the terminal device, including a ZP CSI-RS trigger field (ZP CSI-RS trigger), where the ZP CSI-RS trigger indicates to trigger an aperiodic ZP CSI-RS resource set in the aperiodic ZP CSI-RS resource set list.

A length of the field ZP CSI-RS trigger in the DCI is determined based on a number of aperiodic ZP CSI-RS resource sets included in the aperiodic ZP CSI-RS resource set list, that is, $\left⌈{log}_{2}\left({n}_{zp}+1\right)\right⌉$ bits, where *n_{zp}* represents the number of aperiodic ZP CSI-RS resource sets included in the aperiodic ZP CSI-RS resource set list. An association relationship between the ZP CSI-RS trigger and the aperiodic ZP CSI-RS resource set is as follows:
'01': used to trigger a ZP CSI-RS resource set whose ZP CSI-RS resource set ID (ZP-CSI-RS-ResourceSetId) is 1;
'10': used to trigger a ZP CSI-RS resource set whose ZP CSI-RS resource set ID (ZP-CSI-RS-ResourceSetId) is 2;
'11': used to trigger a ZP CSI-RS resource set whose ZP CSI-RS resource set ID (ZP-CSI-RS-ResourceSetId) is 3; and
'00': reserved, and not used to trigger any ZP CSI-RS resource set.

With reference to FIG. 1, the foregoing briefly describes a scenario to which the communication method provided in embodiments of this application can be applied, describes basic concepts that may be used in embodiments of this application, and describes the ZP CSI-RS resource and an antenna configuration manner on the network device side for SBFD in the basic concepts.

It should be understood that based on the second-type antenna configuration on the SBFD network device side, two sets of NZP-CSI-RS resource configurations used for channel measurement in the SBFD time unit and the non-SBFD time unit are different. Optionally, two sets of NZP-CSI-RS resource configurations used for interference measurement in the SBFD time unit and the non-SBFD time unit are also different. Therefore, the network device also needs to configure two sets of ZP CSI-RS resources corresponding to two sets of NZP-CSI-RS resources used for channel measurement. Optionally, the network device further needs to configure two sets of ZP CSI-RS resources corresponding to two sets of NZP-CSI-RS resources used for interference measurement.

However, a number of ZP CSI-RS resources is limited currently:
aperiodic ZP CSI-RS resource: a maximum of three ZP CSI-RS resource sets;
semi-persistent ZP CSI-RS resource: a maximum of 16 ZP CSI-RS resource sets; and
periodic ZP CSI-RS resource: a maximum of one ZP CSI-RS resource set.

In addition, one ZP CSI-RS resource set includes a maximum of 16 ZP CSI-RS resources. A requirement for more ZP CSI-RS resource configurations cannot be met in an SBFD scenario when the second-type antenna configuration on the SBFD network device side is used, and flexibility is low.

To enable the terminal device to perform CSI measurement in the SBFD time unit and the non-SBFD time unit in a scenario in which a channel environment and an interference environment in the SBFD time unit are different from a channel environment and an interference environment in the non-SBFD time unit (for example, antenna configurations of the SBFD time unit and the non-SBFD time unit are different), this application provides a communication method, to configure, for the terminal device, time-frequency resources that cannot be used to receive or send a signal in different time units.

It should be understood that the communication method provided in embodiments of this application may be applied to a system in which communication is performed by using a multi-antenna technology, for example, the communication system 100 shown in FIG. 1. The communication system may include at least one network device and at least one terminal device.

It should be further understood that a specific structure of an execution body of the method provided in embodiments of this application is not particularly limited in embodiments shown below, provided that a program that records code for the method provided in embodiments of this application can be run to perform communication according to the method provided in embodiments of this application. For example, the method provided in embodiments of this application may be performed by a terminal device, or a functional module that is in the terminal device that can invoke and execute a program.

FIG. 7 is a schematic flowchart of a communication method according to an embodiment of this application. The method includes the following steps.

S710: A network device sends a first message to a terminal device. Correspondingly, the terminal device receives the first message from the network device.

The first message indicates reception of a first signal. The first signal includes but is not limited to a PDSCH or another signal that cannot be received or sent on a ZP CSI-RS resource. Examples are not enumerated for description herein.

S720: The network device sends a second message to the terminal device. Correspondingly, the terminal device receives the second message from the network device.

The second message indicates a first resource set including a first resource and a second resource, a time domain resource of the first resource is in an SBFD time unit, and a time domain resource of the second resource is in a non-SBFD time unit.

For example, the first message and the second message may be information carried in a same message, or the first message and the second message are different messages. This is not limited in this embodiment.

That the time domain resource of the first resource is in the SBFD time unit, and the time domain resource of the second resource is in the non-SBFD time unit may be understood as follows: Compared with a number of ZP CSI-RS resources included in a ZP CSI-RS resource set or a ZP CSI-RS resource set list currently configured by the network device, in this embodiment, a number of ZP CSI-RS resources configured by the network device is large, so that resource requirements of the non-SBFD time unit and the SBFD time unit can be met.

By way of example and not limitation, the first resource and the second resource are ZP CSI-RS resources or other resources on which signal transmission cannot be performed. Names of resources are not limited in this embodiment. For ease of description, the resource may be referred to as the ZP CSI-RS resource in the following.

In a possible implementation, the second message is higher layer signaling (for example, RRC).

In another possible implementation, the second message is newly added signaling between the network device and the terminal device. For example, the second message is signaling newly added by the network device to configure the first resource set for the terminal device.

It should be understood that whether the second message is reused existing signaling or newly added signaling is not limited in this embodiment. All signaling that can indicate the first resource set needed by the terminal in this embodiment falls within the protection scope of this application.

For example, in this embodiment, the first resource set that includes the first resource and the second resource and that is indicated by the second message includes the following several possible manners.

Manner 1: The first resource set includes one or more of the following:
two periodic ZP CSI-RS resource sets;
two semi-persistent ZP CSI-RS resource set lists; or
two aperiodic ZP CSI-RS resource set lists.

Specifically, each of the two periodic ZP CSI-RS resource sets includes a maximum of 16 ZP CSI-RS resources.

Each of the two semi-persistent ZP CSI-RS resource set lists includes a maximum of 16 ZP CSI-RS resource sets, and each ZP CSI-RS resource set includes a maximum of 16 ZP CSI-RS resources.

In addition, each of the two aperiodic ZP CSI-RS resource set lists includes a maximum of three ZP CSI-RS resource sets, and each ZP CSI-RS resource set includes a maximum of 16 ZP CSI-RS resources.

Compared with the foregoing ZP CSI-RS resource configuration manner (configuring one periodic ZP CSI-RS resource set, one semi-persistent ZP CSI-RS resource set list, or one aperiodic ZP CSI-RS resource set list), in the case shown in the manner 1, it is equivalent to expanding a number of ZP CSI-RS resource sets or ZP CSI-RS resource set lists.

For example, the two periodic ZP CSI-RS resource sets include a first periodic ZP CSI-RS resource set and a second periodic ZP CSI-RS resource set, the first resource is included in the first periodic ZP CSI-RS resource set, and the second resource is included in the second periodic ZP CSI-RS resource set. In other words, in the two periodic ZP CSI-RS resource sets, all ZP CSI-RS resources in one periodic ZP CSI-RS resource set are configured in one type of time unit among the SBFD time unit and the non-SBFD time unit, and all ZP CSI-RS resources in the other periodic ZP CSI-RS resource set are configured in the other type of time unit.

For example, the two periodic ZP CSI-RS resource sets include a periodic ZP CSI-RS resource set #1 and a periodic ZP CSI-RS resource set #2, the periodic ZP CSI-RS resource set #1 is a periodic ZP CSI-RS resource set dedicated to non-SBFD, and the periodic ZP CSI-RS resource set list #2 is a periodic ZP CSI-RS resource set dedicated to SBFD. The terminal device does not expect all ZP CSI-RS resources in the periodic ZP CSI-RS resource set #1 to be configured in the SBFD time unit. Similarly, the terminal device does not expect all ZP CSI-RS resources in the periodic ZP CSI-RS resource set #2 to be configured in the non-SBFD time unit.

It should be understood that the periodic ZP CSI-RS resource set dedicated to non-SBFD and the periodic ZP CSI-RS resource set dedicated to SBFD in the two periodic ZP CSI-RS resource sets are distinguished by using different higher layer signaling names.

For example, a higher layer information element corresponding to the periodic ZP CSI-RS resource set dedicated to non-SBFD is p-ZP-CSI-RS-ResourceSet, and a higher layer information element corresponding to the periodic ZP CSI-RS resource set dedicated to SBFD is p-ZP-CSI-RS-ResourceSet-SBFD.

For example, the two semi-persistent ZP CSI-RS resource set lists include a first semi-persistent ZP CSI-RS resource set list and a second semi-persistent ZP CSI-RS resource set list, the first resource is included in the first semi-persistent ZP CSI-RS resource set list, and the second resource is included in the second semi-persistent ZP CSI-RS resource set list. In other words, in the two semi-persistent ZP CSI-RS resource set lists, all ZP CSI-RS resources in one semi-persistent ZP CSI-RS resource set list are configured in one type of time unit among the SBFD time unit and the non-SBFD time unit, and all ZP CSI-RS resources in the other semi-persistent ZP CSI-RS resource set list are configured in the other type of time unit.

For example, the two semi-persistent ZP CSI-RS resource set lists include a semi-persistent ZP CSI-RS resource set list #1 and a semi-persistent ZP CSI-RS resource set list #2, the semi-persistent ZP CSI-RS resource set list #1 is a periodic ZP CSI-RS resource set dedicated to non-SBFD, and the semi-persistent ZP CSI-RS resource set list #2 is a periodic ZP CSI-RS resource set dedicated to SBFD. The terminal device does not expect all ZP CSI-RS resources in the semi-persistent ZP CSI-RS resource set list #1 to be configured in the SBFD time unit. Similarly, the terminal device does not expect all ZP CSI-RS resources in the semi-persistent ZP CSI-RS resource set list #2 to be configured in the non-SBFD time unit.

It should be understood that the semi-persistent ZP CSI-RS resource set list dedicated to non-SBFD and the semi-persistent ZP CSI-RS resource set list dedicated to SBFD in the two semi-persistent ZP CSI-RS resource set lists are distinguished by using different higher layer signaling names.

For example, a higher layer information element corresponding to the semi-persistent ZP CSI-RS resource set list dedicated to non-SBFD is sp-ZP-CSI-RS-ResourceSetsToAddModList, and a higher layer information element corresponding to the semi-persistent ZP CSI-RS resource set list dedicated to SBFD is sp-ZP-CSI-RS-ResourceSetsToAddModList-SBFD.

For example, the two aperiodic ZP CSI-RS resource set lists include a first aperiodic ZP CSI-RS resource set list and a second aperiodic ZP CSI-RS resource set list, the first resource is included in the first aperiodic ZP CSI-RS resource set list, and the second resource is included in the second aperiodic ZP CSI-RS resource set list. In other words, in the two aperiodic ZP CSI-RS resource set lists, all ZP CSI-RS resources in one aperiodic ZP CSI-RS resource set list are configured in one type of time unit among the SBFD time unit and the non-SBFD time unit, and all ZP CSI-RS resources in the other aperiodic ZP CSI-RS resource set list are configured in the other type of time unit.

For example, the two aperiodic ZP CSI-RS resource set lists include an aperiodic ZP CSI-RS resource set list #1 and an aperiodic ZP CSI-RS resource set list #2, the aperiodic ZP CSI-RS resource set list #1 is an aperiodic ZP CSI-RS resource set list dedicated to non-SBFD, and the aperiodic ZP CSI-RS resource set list #2 is an aperiodic ZP CSI-RS resource set list dedicated to SBFD. The terminal device does not expect all ZP CSI-RS resources in the aperiodic ZP CSI-RS resource set list #1 to be configured in the SBFD time unit. Similarly, the terminal device does not expect all ZP CSI-RS resources in the aperiodic ZP CSI-RS resource set list #2 to be configured in the non-SBFD time unit.

It should be understood that the aperiodic ZP CSI-RS resource set list dedicated to non-SBFD and the aperiodic ZP CSI-RS resource set list dedicated to SBFD in the two aperiodic ZP CSI-RS resource set lists are distinguished by using different higher layer signaling names.

For example, a higher layer information element corresponding to the aperiodic ZP CSI-RS resource set list dedicated to non-SBFD is aperiodic-ZP-CSI-RS-ResourceSetsToAddModList, and a higher layer information element corresponding to the aperiodic ZP CSI-RS resource set list dedicated to SBFD is aperiodic-ZP-CSI-RS-ResourceSetsToAddModList-SBFD.

Manner 2: The first resource set includes one or more of the following:
one periodic ZP CSI-RS resource set list;
one semi-persistent ZP CSI-RS resource set list; or
one aperiodic ZP CSI-RS resource set list.

Specifically, the periodic ZP CSI-RS resource set list includes a maximum of two ZP CSI-RS resource sets, and each ZP CSI-RS resource set includes a maximum of 16 ZP CSI-RS resources.

The semi-persistent ZP CSI-RS resource set list includes a maximum of 32 ZP CSI-RS resource sets, and each ZP CSI-RS resource set includes a maximum of 16 ZP CSI-RS resources.

The aperiodic ZP CSI-RS resource set list includes a maximum of six or seven ZP CSI-RS resource sets, and each ZP CSI-RS resource set includes a maximum of 16 ZP CSI-RS resources.

Compared with the foregoing ZP CSI-RS resource configuration manner (configuring one periodic ZP CSI-RS resource set, one semi-persistent ZP CSI-RS resource set list, or one aperiodic ZP CSI-RS resource set list), in the case shown in the manner 2, it is equivalent to expanding a number of ZP CSI-RS resource sets included in the ZP CSI-RS resource set list.

For example, one periodic ZP CSI-RS resource set list includes two ZP CSI-RS resource sets, one of the two ZP CSI-RS resource sets includes the first resource, and the other includes the second resource. In other words, all ZP CSI-RS resources in one of the two ZP CSI-RS resource sets are configured in one type of time unit among the SBFD time unit and the non-SBFD time unit, and all ZP CSI-RS resources in the other ZP CSI-RS resource set are configured in the other type of time unit.

For example, one periodic ZP CSI-RS resource set list includes a ZP CSI-RS resource set #1 and a ZP CSI-RS resource set #2, the ZP CSI-RS resource set #1 is a periodic ZP CSI-RS resource set dedicated to non-SBFD, and the ZP CSI-RS resource set #2 is a periodic ZP CSI-RS resource set dedicated to SBFD. The terminal device does not expect all ZP CSI-RS resources in the ZP CSI-RS resource set #1 to be configured in the SBFD time unit. Similarly, the terminal device does not expect all ZP CSI-RS resources in the ZP CSI-RS resource set #2 to be configured in the non-SBFD time unit.

For example, one semi-persistent ZP CSI-RS resource set list includes 32 ZP CSI-RS resource sets, 16 ZP CSI-RS resource sets include the first resource, and the other 16 ZP CSI-RS resource sets include the second resource.

For example, one aperiodic ZP CSI-RS resource set list includes six or seven ZP CSI-RS resource sets, one of three ZP CSI-RS resource sets includes the first resource, and the other three or four ZP CSI-RS resource sets include the second resource; or one of three ZP CSI-RS resource sets includes the second resource, and the other three or four ZP CSI-RS resource sets include the first resource.

Manner 3: The first resource set includes one or more of the following:
one periodic ZP CSI-RS resource set;
one semi-persistent ZP CSI-RS resource set list; or
one aperiodic ZP CSI-RS resource set list.

Specifically, one periodic ZP CSI-RS resource set includes a maximum of 32 ZP CSI-RS resources.

One semi-persistent ZP CSI-RS resource set list includes a maximum of 16 ZP CSI-RS resource sets, and each ZP CSI-RS resource set includes a maximum of 32 ZP CSI-RS resources.

In addition, one aperiodic ZP CSI-RS resource set list includes a maximum of three ZP CSI-RS resource sets, and each ZP CSI-RS resource set includes a maximum of 32 ZP CSI-RS resources.

Compared with the foregoing ZP CSI-RS resource configuration manner (configuring one periodic ZP CSI-RS resource set, one semi-persistent ZP CSI-RS resource set list, or one aperiodic ZP CSI-RS resource set list), in the case shown in the manner 3, it is equivalent to expanding a number of ZP CSI-RS resources included in the ZP CSI-RS resource set.

Manner 4: The first resource set includes one or more of the following:
one periodic ZP CSI-RS resource set;
one semi-persistent ZP CSI-RS resource set list; or
one aperiodic ZP CSI-RS resource set list.

Specifically, one periodic ZP CSI-RS resource set includes a maximum of 16 ZP CSI-RS resources.

One semi-persistent ZP CSI-RS resource set list includes a maximum of 16 ZP CSI-RS resource sets, and each ZP CSI-RS resource set includes a maximum of 16 ZP CSI-RS resources.

In addition, one aperiodic ZP CSI-RS resource set list includes a maximum of three ZP CSI-RS resource sets, and each ZP CSI-RS resource set includes a maximum of 16 ZP CSI-RS resources.

Compared with the foregoing ZP CSI-RS resource configuration manner (configuring one periodic ZP CSI-RS resource set, one semi-persistent ZP CSI-RS resource set list, or one aperiodic ZP CSI-RS resource set list), in the case shown in the manner 4, a configured ZP CSI-RS resource is not directly expanded, but each ZP CSI-RS resource includes two ZP CSI-RS sub-resources, it is equivalent to enhancing the ZP CSI-RS resource, and expansion of the ZP CSI-RS resource is indirectly implemented by configuring the two ZP CSI-RS sub-resources.

Specifically, two ZP CSI-RS sub-resources in one ZP CSI-RS resource are configured at the same time. To be specific, CSI measurement in the SBFD time unit and CSI measurement in the non-SBFD time unit are usually configured in pairs. Therefore, corresponding ZP CSI-RS sub-resources may also be configured in pairs.

The ZP CSI-RS sub-resource includes a resource mapping parameter, a periodicity, and an offset parameter. The resource mapping parameter is an RRC information element CSI-RS resource mapping (CSI-RS-ResourceMapping), and the periodicity and the offset parameter are a higher layer information element periodicityAndOffset. For descriptions of related parameters, refer to stipulations in an existing protocol. Details are not described herein.

For example, each ZP CSI-RS resource includes a first ZP CSI-RS sub-resource and a second ZP CSI-RS sub-resource, one of the two sub-resources includes the first resource, and the other sub-resource includes the second resource. In other words, each ZP CSI-RS resource includes a first ZP CSI-RS sub-resource and a second ZP CSI-RS sub-resource. The first ZP CSI-RS sub-resource is configured in one type of time unit among the SBFD time unit and the non-SBFD time unit, and the second ZP CSI-RS sub-resource is configured in the other type of time unit.

For example, each ZP CSI-RS resource includes a ZP CSI-RS sub-resource dedicated to SBFD and a ZP CSI-RS sub-resource dedicated to non-SBFD. The terminal device does not expect the ZP CSI-RS sub-resource dedicated to SBFD to be configured in the non-SBFD time unit. Similarly, the terminal device does not expect the ZP CSI-RS sub-resource dedicated to non-SBFD to be configured in the SBFD time unit.

It should be understood that the foregoing manners 1 to 4 are merely examples for describing possible implementations in which the network device configures, by using the second message, the first resource set including the first resource and the second resource in this embodiment, and do not constitute any limitation on the protection scope of this application. For example, in this embodiment, the network device may configure, by using the second message, a resource other than the foregoing resource set or resource set list. Examples are not enumerated herein.

It should be further understood that if the second message indicates the first resource and the second resource, the terminal device and the network device cannot send or receive a PDSCH on time-frequency resources included in the first resource and the second resource.

It should be noted that if the ZP CSI-RS resource configured by using the second message includes a semi-persistent ZP CSI-RS resource, the semi-persistent ZP CSI-RS resource needs to be activated/deactivated by using a message. The method procedure shown in FIG. 7 may further include the following step.

S730: The network device sends an activation/deactivation message to the terminal device. Correspondingly, the terminal device receives the activation/deactivation message from the network device.

Specifically, the activation message is used to activate a semi-persistent ZP CSI-RS resource corresponding to the SBFD time unit and a semi-persistent ZP CSI-RS resource corresponding to the non-SBFD time unit, and the deactivation message is used to deactivate a semi-persistent ZP CSI-RS resource corresponding to the SBFD time unit and a semi-persistent ZP CSI-RS resource corresponding to the non-SBFD time unit. The activation/deactivation message may be a MAC CE, and the MAC CE carries a field indicating to activate/deactivate a ZP CSI-RS resource.

For example, in this implementation, a manner in which the activation/deactivation message is used to activate or deactivate one semi-persistent ZP CSI-RS resource set corresponding to each of the SBFD time unit and the non-SBFD time unit includes but is not limited to the following several possible implementations.

Manner 1.1: Corresponding to the foregoing manner 1, that is, the ZP CSI-RS resource configured by using the second message includes two semi-persistent ZP CSI-RS resource set lists. One semi-persistent ZP CSI-RS resource set list corresponds to the SBFD time unit, and the other semi-persistent ZP CSI-RS resource set list corresponds to the non-SBFD time unit. For example, the first resource is included in the first semi-persistent ZP CSI-RS resource set list, and the second resource is included in the second semi-persistent ZP CSI-RS resource set list.

In a possible implementation, in the case shown in the manner 1.1, the activation/deactivation message may be referred to as a third message, and the third message includes a first field and a second field.

For example, the first field is used to activate the first resource in the first semi-persistent ZP CSI-RS resource set list, and the second field is used to activate the second resource in the second semi-persistent ZP CSI-RS resource set list; or the first field is used to deactivate a third resource in the first semi-persistent ZP CSI-RS resource set list, and the second field is used to deactivate a fourth resource in the second semi-persistent ZP CSI-RS resource set list.

In this implementation, the first field indicates an index of an activated/deactivated ZP CSI-RS resource set in the first semi-persistent ZP CSI-RS resource set list (for example, the semi-persistent ZP CSI-RS resource set list corresponding to the SBFD time unit), and the second field indicates an index of an activated/deactivated ZP CSI-RS resource set in the second semi-persistent ZP CSI-RS resource set list (for example, the semi-persistent ZP CSI-RS resource set list corresponding to the non-SBFD time unit).

For example, the third message may be an SP ZP CSI-RS Resource Set Activation/Deactivation MAC CE (for example, the MAC CE structure shown in FIG. 6 above) defined in a current protocol. The first field and the second field are respectively located in the least significant 4 bits and the most significant 4 bits of a second byte in the MAC CE, as shown in FIG. 8a, or the first field and the second field are respectively located in the most significant 4 bits and the least significant 4 bits of a second byte in the MAC CE.

In another possible implementation, in the case shown in the manner 1.1, the activation/deactivation message may be referred to as a third message #1, and the third message #1 includes a first field #1.

For example, the first field #1 is used to activate the first resource in the first semi-persistent ZP CSI-RS resource set list and is used to activate the second resource in the second semi-persistent ZP CSI-RS resource set list; or the first field #1 is used to deactivate a third resource in the first semi-persistent ZP CSI-RS resource set list and is used to deactivate a fourth resource in the second semi-persistent ZP CSI-RS resource set list.

In this implementation, the first field #1 indicates an index of an activated ZP CSI-RS resource set in the first semi-persistent ZP CSI-RS resource set list, and indicates an index of an activated ZP CSI-RS resource set in the second semi-persistent ZP CSI-RS resource set list; or the first field #1 indicates an index of a deactivated ZP CSI-RS resource set in the first semi-persistent ZP CSI-RS resource set list, and indicates an index of a deactivated ZP CSI-RS resource set in the second semi-persistent ZP CSI-RS resource set list.

Optionally, the third message #1 is a MAC CE, and the MAC CE includes a first bit and a second bit. If the first bit is a first value, it indicates that activation or deactivation of a ZP CSI-RS resource set in the first semi-persistent ZP CSI-RS resource set list or the second semi-persistent ZP CSI-RS resource set list is determined based on the second bit; or if the first bit is a second value, it indicates that ZP CSI-RS resource sets in the first semi-persistent ZP CSI-RS resource set list and the second semi-persistent ZP CSI-RS resource set list are to be activated or deactivated.

For example, two reserved bits in the MAC CE are reused, for example, bits reserved in a most significant bit (a 1^{st} reserved bit) and a second most significant bit (a 2^{nd} reserved bit) in the MAC CE may be reused. The 1^{st} reserved bit is the first bit, and the 2^{nd} reserved bit is the second bit.

If the first bit is 0, it indicates that a ZP CSI-RS resource set is determined from a specific semi-persistent ZP CSI-RS resource set list based on the second bit.

If the second bit is 0, a ZP CSI-RS resource set is determined from a 1^{st} semi-persistent ZP CSI-RS resource set list. Specifically, a ZP CSI-RS resource set is determined from the 1^{st} semi-persistent ZP CSI-RS resource set list based on the first field #1. If the second bit is 1, a ZP CSI-RS resource set is determined from a 2^{nd} semi-persistent ZP CSI-RS resource set list. Specifically, a ZP CSI-RS resource set is determined from the 2^{nd} semi-persistent ZP CSI-RS resource set list based on the first field #1.

If the first bit is 1, it indicates that a ZP CSI-RS resource set in the first semi-persistent ZP CSI-RS resource set list and a ZP CSI-RS resource set in the second semi-persistent ZP CSI-RS resource set list are to be activated at the same time. Specifically, a ZP CSI-RS resource set is determined from the 1^{st} semi-persistent ZP CSI-RS resource set list based on the first field #1, and at the same time, a ZP CSI-RS resource set is determined from the 2^{nd} semi-persistent ZP CSI-RS resource set list based on the first field #1.

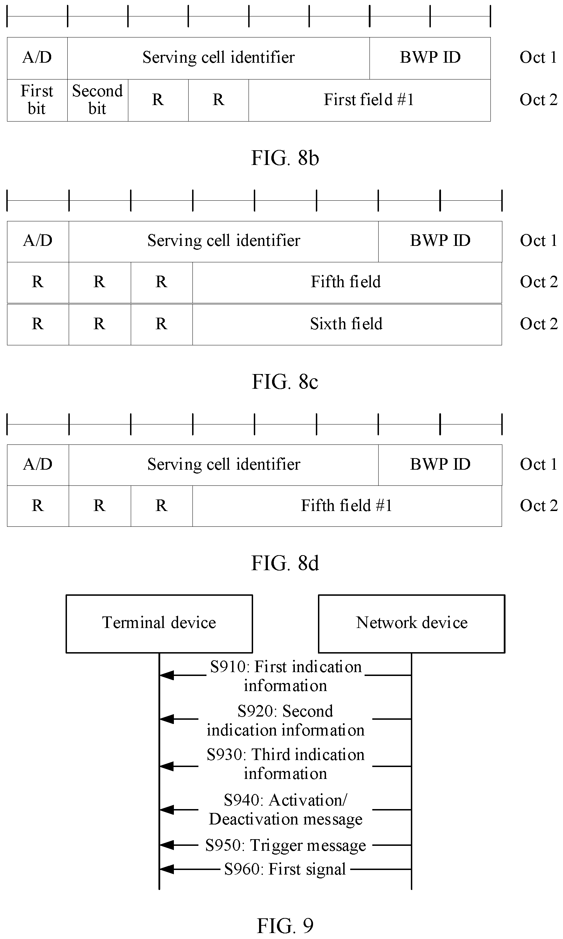

By way of example and not limitation, the third message #1 may be an SP ZP CSI-RS Resource Set Activation/Deactivation MAC CE (for example, the MAC CE structure shown in FIG. 6 above) defined in a current protocol, the first field #1 is located in the least significant 4 bits of a second byte in the MAC CE, and the most significant 2 bits of reserved bits are reused as the first bit and the second bit, as shown in FIG. 8b. Alternatively, other reserved bits are reused as the first bit and the second bit, or the first bit and the second bit are bits in a newly added byte, or the first bit and the second bit are not included. Details are not described herein.

For example, the first semi-persistent ZP CSI-RS resource set list is the 1^{st} semi-persistent ZP CSI-RS resource set list, and the second semi-persistent ZP CSI-RS resource set list is the 2^{nd} semi-persistent ZP CSI-RS resource set list; or the first semi-persistent ZP CSI-RS resource set list is the 2^{nd} semi-persistent ZP CSI-RS resource set list, and the second semi-persistent ZP CSI-RS resource set list is the 1^{st} semi-persistent ZP CSI-RS resource set list. The 1^{st} semi-persistent ZP CSI-RS resource set list may be a semi-persistent ZP CSI-RS resource set list with a smaller identifier (identifier, ID) in the two semi-persistent ZP CSI-RS resource set lists, and the 2^{nd} semi-persistent ZP CSI-RS resource set list may be a semi-persistent ZP CSI-RS resource set list with a larger ID in the two semi-persistent ZP CSI-RS resource set lists; or the 1^{st} semi-persistent ZP CSI-RS resource set list may be any semi-persistent ZP CSI-RS resource set list in the two semi-persistent ZP CSI-RS resource set lists, and the 2^{nd} semi-persistent ZP CSI-RS resource set list may be the other semi-persistent ZP CSI-RS resource set list in the two semi-persistent ZP CSI-RS resource set lists. This is not limited in this embodiment.

It should be understood that each of the two semi-persistent ZP CSI-RS resource set lists includes a corresponding index, for example, a first index included in the 1^{st} semi-persistent ZP CSI-RS resource set list, and a second index included in the 2^{nd} semi-persistent ZP CSI-RS resource set list. The first index is different from the second index.

In addition, after receiving the activation/deactivation message, the terminal device may activate/deactivate the ZP CSI-RS resource set in the first semi-persistent ZP CSI-RS resource set list and the ZP CSI-RS resource set in the second semi-persistent ZP CSI-RS resource set list at the same time. CSI measurement in the SBFD time unit and CSI measurement in the non-SBFD time unit are usually configured in pairs. Therefore, corresponding ZP CSI-RS resource sets may also be activated/deactivated in pairs.

Manner 1.2: Corresponding to the foregoing manner 2, that is, the ZP CSI-RS resource configured by using the second message includes one semi-persistent ZP CSI-RS resource set list. One semi-persistent ZP CSI-RS resource set list includes a maximum of 32 ZP CSI-RS resource sets, 16 ZP CSI-RS resource sets in the 32 ZP CSI-RS resource sets correspond to the SBFD time unit, and the other 16 ZP CSI-RS resource sets correspond to the non-SBFD time unit. For example, the first resource is included in the 16 ZP CSI-RS resource sets, and the second resource is included in the other 16 ZP CSI-RS resource sets.

In a possible implementation, in the case shown in the manner 1.2, the activation/deactivation message may be referred to as a fifth message, and the fifth message includes a fifth field and a sixth field.

For example, the fifth field is used to activate the first resource in the semi-persistent ZP CSI-RS resource set list, and the sixth field is used to activate the second resource in the semi-persistent ZP CSI-RS resource set list; or the fifth field is used to deactivate a third resource in the semi-persistent ZP CSI-RS resource set list, and the sixth field is used to deactivate a fourth resource in the semi-persistent ZP CSI-RS resource set list.

For example, the fifth field indicates an index of an activated/deactivated ZP CSI-RS resource set corresponding to the SBFD time unit in the semi-persistent ZP CSI-RS resource set list, and the sixth field indicates an index of an activated/deactivated ZP CSI-RS resource set corresponding to the non-SBFD time unit in the semi-persistent ZP CSI-RS resource set list.

For example, the fifth message may be a newly defined SP ZP CSI-RS Resource Set Activation/Deactivation MAC CE, the MAC CE includes three bytes, and the fifth field and the sixth field are respectively located in a second byte and a third byte of the MAC CE. For example, each of the fifth field and the sixth field is located in the least significant 5 bits of a corresponding byte, as shown in FIG. 8c.

In another possible implementation, in the case shown in the manner 2.1, the activation/deactivation message may be referred to as a fifth message #1, and the fifth message #1 includes a fifth field #1.

For example, the fifth field #1 is used to activate the first resource and the second resource in the semi-persistent ZP CSI-RS resource set list; or the fifth field #1 is used to deactivate the first resource and the second resource in the semi-persistent ZP CSI-RS resource set list. For example, 16 resource sets in the 32 resource sets and the other 16 resource sets are numbered independently (ID).

For example, the fifth field #1 indicates an index of an activated ZP CSI-RS resource set corresponding to the SBFD time unit in the semi-persistent ZP CSI-RS resource set list, and indicates an index of an activated/deactivated ZP CSI-RS resource set corresponding to the non-SBFD time unit in the semi-persistent ZP CSI-RS resource set list.

For example, the fifth message #1 may be a newly defined SP ZP CSI-RS Resource Set Activation/Deactivation MAC CE, the MAC CE includes two bytes, and the fifth field #1 is located in the least significant 5 bits of a corresponding byte, as shown in FIG. 8d.

It should be understood that after receiving the activation/deactivation message, the terminal device may activate/deactivate two (different) ZP CSI-RS resource sets in the semi-persistent ZP CSI-RS resource set list at the same time. CSI measurement in the SBFD time unit and CSI measurement in the non-SBFD time unit are usually configured in pairs. Therefore, corresponding ZP CSI-RS resource sets may also be activated/deactivated in pairs.

Optionally, the manner 1.2 corresponds to the manner 2. In the case shown in the manner 2, the 16 resource sets in the 32 resource sets may be considered as one semi-persistent ZP CSI-RS resource set sub-list. In other words, one semi-persistent ZP CSI-RS resource set list includes two semi-persistent ZP CSI-RS resource set sub-lists. In this assumption, the activation/deactivation message in the case shown in the manner 1.2 may be a fifth message #2, and the fifth message #2 includes a fifth field #2 and a sixth field #2.

For example, the fifth field #2 is used to activate the first resource in one semi-persistent ZP CSI-RS resource set sub-list, and the sixth field #2 is used to activate the second resource in the other semi-persistent ZP CSI-RS resource set sub-list; or the fifth field #2 is used to deactivate the third resource in one semi-persistent ZP CSI-RS resource set sub-list, and the sixth field #2 is used to deactivate the fourth resource in the other semi-persistent ZP CSI-RS resource set sub-list. A structure of the fifth message #2 may be similar to the structure of the third message shown in FIG. 8a. The first field and the second field in FIG. 8a are respectively replaced with the fifth field #2 and the sixth field #2, where a length of the fifth field #2 and a length of the sixth field #2 are both 4 bits.

Manner 1.3: Corresponding to the foregoing manner 3, that is, one semi-persistent ZP CSI-RS resource set list configured by using the second message includes a maximum of 16 ZP CSI-RS resource sets, and each ZP CSI-RS resource set includes a maximum of 32 ZP CSI-RS resources.

In the case shown in the manner 1.3, the activation/deactivation message indicates an activated/deactivated ZP CSI-RS resource set in the semi-persistent ZP CSI-RS resource set list. For the activation/deactivation message, refer to the foregoing descriptions of the MAC CE in FIG. 6 above. Details are not described herein again.

In the case shown in the manner 1.3, a maximum number of ZP CSI-RS resource sets included in the semi-persistent ZP CSI-RS resource set list is expanded from 16 to 32.

Manner 1.4: Corresponding to the foregoing manner 4, that is, one semi-persistent ZP CSI-RS resource set list configured by using the second message includes a maximum of 16 ZP CSI-RS resource sets, and each ZP CSI-RS resource set includes a maximum of 16 ZP CSI-RS resources. Each ZP CSI-RS resource includes two ZP CSI-RS sub-resources.

In the case shown in the manner 1.4, the activation/deactivation message indicates an activated/deactivated ZP CSI-RS resource set in the semi-persistent ZP CSI-RS resource set list, and each ZP CSI-RS resource in the ZP CSI-RS resource set includes two ZP CSI-RS sub-resources. For the activation/deactivation message, refer to the foregoing descriptions of the MAC CE in FIG. 6 above. Details are not described herein again.

In the case shown in the manner 1.4, the ZP CSI-RS resource is enhanced, and the two ZP CSI-RS sub-resources are configured to implicitly implement expansion of the ZP CSI-RS resource.

It should be understood that two ZP CSI-RS sub-resources in one ZP CSI-RS resource are always activated/deactivated at the same time.

It should be understood that CSI measurement in the SBFD time unit and CSI measurement in the non-SBFD time unit are usually configured in pairs. Therefore, corresponding ZP CSI-RS sub-resources may also be activated/deactivated in pairs.

It should be noted that if the first resource and/or the second resource configured by using the second message are/is aperiodic ZP CSI-RS resources/an aperiodic ZP CSI-RS resource, the aperiodic ZP CSI-RS resource needs to be triggered by using a message. The method procedure shown in FIG. 7 may further include the following step.

S740: The network device sends a trigger message to the terminal device. Correspondingly, the terminal device receives the trigger message from the network device.

Specifically, the trigger message is used to trigger an aperiodic ZP CSI-RS resource corresponding to the SBFD time unit and an aperiodic ZP CSI-RS resource corresponding to the non-SBFD time unit. The trigger message may be DCI, and the DCI carries a field indicating to trigger a ZP CSI-RS resource.

For example, in this implementation, a manner in which the trigger message is used to trigger one aperiodic ZP CSI-RS resource set corresponding to each of the SBFD time unit and the non-SBFD time unit includes but is not limited to the following several possible implementations.

Manner 2.1: Corresponding to the foregoing manner 1, that is, the ZP CSI-RS resource configured by using the second message includes two aperiodic ZP CSI-RS resource set lists. One aperiodic ZP CSI-RS resource set list corresponds to the SBFD time unit, and the other aperiodic ZP CSI-RS resource set list corresponds to the non-SBFD time unit. For example, the first resource is included in the first aperiodic ZP CSI-RS resource set list, and the second resource is included in the second aperiodic ZP CSI-RS resource set list.

In a possible implementation, in the case shown in the manner 2.1, the trigger message may be referred to as a fourth message, and the fourth message includes a third field and a fourth field.

For example, the third field is used to trigger the first resource in the first aperiodic ZP CSI-RS resource set list, and the fourth field is used to trigger the second resource in the second aperiodic ZP CSI-RS resource set list.

Optionally, the third field indicates an index of a triggered ZP CSI-RS resource set in the first aperiodic ZP CSI-RS resource set list (for example, the aperiodic ZP CSI-RS resource set list corresponding to the SBFD time unit), and the fourth field indicates an index of a triggered ZP CSI-RS resource set in the second aperiodic ZP CSI-RS resource set list (for example, the aperiodic ZP CSI-RS resource set list corresponding to the non-SBFD time unit).

For example, the third field is an existing ZP CSI-RS trigger field in DCI, the fourth field is a newly added ZP CSI-RS trigger field in the DCI, and features of the third field and the fourth field include:
A length of the third field is determined based on a number of ZP CSI-RS resource sets included in the first aperiodic ZP CSI-RS resource set list, that is, $\left⌈{log}_{2}\left({n}_{zp , 1}+1\right)\right⌉$ bits, where *n*_{*zp*,1} represents the number of ZP CSI-RS resource sets included in the first aperiodic ZP CSI-RS resource set list.

As described in the manner 1, 0 ≤ *n*_{*zp*,1} ≤ 3. In this case, the length of the third field is 0, 1, or 2 bits.

A length of the fourth field is determined based on a number of ZP CSI-RS resource sets included in the second aperiodic ZP CSI-RS resource set list, that is, $\left⌈{log}_{2}\left({n}_{zp , 2}+1\right)\right⌉$ bits, where *n*_{*zp*,2} represents the number of ZP CSI-RS resource sets included in the second aperiodic ZP CSI-RS resource set list.

As described in the manner 1, 0 ≤ *n*_{*zp*,2} ≤ 3. In this case, the length of the fourth field is 0, 1, or 2 bits.

Specifically, a method for indicating the ZP CSI-RS resource sets by the third field and the fourth field may be consistent with that specified in the current protocol, for example,
'01': used to trigger a ZP CSI-RS resource set whose ZP CSI-RS resource set ID (ZP-CSI-RS-ResourceSetId) is 1;
'10': used to trigger a ZP CSI-RS resource set whose ZP CSI-RS resource set ID (ZP-CSI-RS-ResourceSetId) is 2; and
'11': used to trigger a ZP CSI-RS resource set whose ZP CSI-RS resource set ID (ZP-CSI-RS-ResourceSetId) is 3.

In another possible implementation, in the case shown in the manner 2.1, the trigger message may be referred to as a fourth message #1, and the fourth message includes a third field #1.

For example, the third field #1 is used to trigger the first resource in the first aperiodic ZP CSI-RS resource set list and the second resource in the second aperiodic ZP CSI-RS resource set list.

Optionally, the fourth message #1 is DCI, and the DCI includes a first bit and a second bit. If the first bit is a first value, it indicates that triggering of a ZP CSI-RS resource set in the first aperiodic ZP CSI-RS resource set list or the second aperiodic ZP CSI-RS resource set list is determined based on the second bit; or if the first bit is a second value, it indicates that ZP CSI-RS resource sets in the first aperiodic ZP CSI-RS resource set list and the second aperiodic ZP CSI-RS resource set list are to be triggered.

For example, 2 reserved bits in the DCI are reused, or 2 bits are newly added to the DCI. The 2 bits include a 1^{st} bit and a 2^{nd} bit, where the 1^{st} bit is the first bit, and the 2^{nd} bit is the second bit.

If the first bit is 0, it indicates that a ZP CSI-RS resource set is determined from a specific aperiodic ZP CSI-RS resource set list based on the second bit.

If the second bit is 0, a ZP CSI-RS resource set is determined from a 1^{st} aperiodic ZP CSI-RS resource set list. Specifically, a ZP CSI-RS resource set is determined from the 1^{st} aperiodic ZP CSI-RS resource set list based on the third field #1. If the second bit is 1, a ZP CSI-RS resource set is determined from a 2^{nd} aperiodic ZP CSI-RS resource set list. Specifically, a ZP CSI-RS resource set is determined from the 2^{nd} aperiodic ZP CSI-RS resource set list based on the third field #1.

If the first bit is 1, it indicates that a ZP CSI-RS resource set in the first aperiodic ZP CSI-RS resource set list and a ZP CSI-RS resource set in the second aperiodic ZP CSI-RS resource set list are to be activated at the same time. Specifically, a ZP CSI-RS resource set is determined from the 1^{st} aperiodic ZP CSI-RS resource set list based on the third field #1, and a ZP CSI-RS resource set is determined from the 2^{nd} aperiodic ZP CSI-RS resource set list based on the third field #1.

For example, the first aperiodic ZP CSI-RS resource set list is one of the two aperiodic ZP CSI-RS resource set lists, and the second aperiodic ZP CSI-RS resource set list is the other of the two aperiodic ZP CSI-RS resource set lists.

For example, the first aperiodic ZP CSI-RS resource set list is the 1^{st} aperiodic ZP CSI-RS resource set list, and the second aperiodic ZP CSI-RS resource set list is the 2^{nd} aperiodic ZP CSI-RS resource set list; or the first aperiodic ZP CSI-RS resource set list is the 2^{nd} aperiodic ZP CSI-RS resource set list, and the second aperiodic ZP CSI-RS resource set list is the 1^{st} aperiodic ZP CSI-RS resource set list. The 1^{st} aperiodic ZP CSI-RS resource set list may be an aperiodic ZP CSI-RS resource set list with a smaller ID in the two aperiodic ZP CSI-RS resource set lists, and the 2^{nd} aperiodic ZP CSI-RS resource set list may be an aperiodic ZP CSI-RS resource set list with a larger ID in the two aperiodic ZP CSI-RS resource set lists; or the 1^{st} aperiodic ZP CSI-RS resource set list may be any aperiodic ZP CSI-RS resource set list in the two aperiodic ZP CSI-RS resource set lists, and the 2^{nd} aperiodic ZP CSI-RS resource set list may be the other aperiodic ZP CSI-RS resource set list in the two aperiodic ZP CSI-RS resource set lists. This is not limited in this embodiment.

It should be understood that each of the two aperiodic ZP CSI-RS resource set lists includes a corresponding index, for example, an index #1 included in the 1^{st} aperiodic ZP CSI-RS resource set list, and an index #2 included in the 2^{nd} aperiodic ZP CSI-RS resource set list. The index #1 is different from the index #2.

It should be understood that after receiving the trigger message, the terminal device may trigger the ZP CSI-RS resource set in the first aperiodic ZP CSI-RS resource set list and the ZP CSI-RS resource set in the second aperiodic ZP CSI-RS resource set list at the same time.

It should be further understood that CSI measurement in the SBFD time unit and CSI measurement in the non-SBFD time unit are usually configured in pairs. Therefore, corresponding ZP CSI-RS resource sets may also be triggered in pairs.

Manner 2.2: Corresponding to the foregoing manner 2, that is, the ZP CSI-RS resource configured by using the second message includes one aperiodic ZP CSI-RS resource set list. One aperiodic ZP CSI-RS resource set list includes a maximum of six or seven ZP CSI-RS resource sets, three ZP CSI-RS resource sets in the six or seven ZP CSI-RS resource sets correspond to the SBFD time unit, and the other three or four ZP CSI-RS resource sets correspond to the non-SBFD time unit. Alternatively, three ZP CSI-RS resource sets in the six or seven ZP CSI-RS resource sets correspond to the non-SBFD time unit, and the other three or four ZP CSI-RS resource sets correspond to the SBFD time unit.

In a possible implementation, in the case shown in the manner 2.2, the trigger message may be referred to as a sixth message, and the sixth message includes a seventh field and an eighth field.

For example, the seventh field is used to trigger the first resource in the aperiodic ZP CSI-RS resource set list, and the eighth field is used to trigger the second resource in the aperiodic ZP CSI-RS resource set list.

For example, the seventh field indicates an index of a triggered ZP CSI-RS resource set corresponding to the SBFD time unit in the aperiodic ZP CSI-RS resource set list, and the eighth field indicates an index of a triggered ZP CSI-RS resource set corresponding to the non-SBFD time unit in the aperiodic ZP CSI-RS resource set list.

In an example, the aperiodic ZP CSI-RS resource set list includes a maximum of seven ZP CSI-RS resource sets.

For example, the seventh field is an existing ZP CSI-RS trigger field in DCI, the eighth field is a newly added ZP CSI-RS trigger field in the DCI, and features of the seventh field and the eighth field include:

Lengths of the seventh field and the eighth field are determined based on a number of ZP CSI-RS resource sets included in the aperiodic ZP CSI-RS resource set list, that is, $\left⌈{log}_{2}\left({n}_{zp}+1\right)\right⌉$ bits, where *n_{zp}* represents the number of ZP CSI-RS resource sets included in the aperiodic ZP CSI-RS resource set list.

As described in the manner 2, 0 ≤ *n_{zp}* ≤ 7. In this case, the lengths of the seventh field and the eighth field are 0, 1, 2, or 3 bits.

A method for indicating the ZP CSI-RS resource set by the seventh field and the eighth field includes:
'001': used to trigger a ZP CSI-RS resource set whose ZP CSI-RS resource set index (ZP-CSI-RS-ResourceSetId) is 1;
'010': used to trigger a ZP CSI-RS resource set whose ZP CSI-RS resource set index (ZP-CSI-RS-ResourceSetId) is 2;
   ...
'111': used to trigger a ZP CSI-RS resource set whose ZP CSI-RS resource set index (ZP-CSI-RS-ResourceSetId) is 7; and
'000': reserved, and not used to trigger any ZP CSI-RS resource set.

It should be understood that after receiving the trigger message, the terminal device may trigger two (different) ZP CSI-RS resource sets indicated by the seventh field and the eighth field in the aperiodic ZP CSI-RS resource set list at the same time.

It should be understood that CSI measurement in the SBFD time unit and CSI measurement in the non-SBFD time unit are usually configured in pairs. Therefore, corresponding ZP CSI-RS resource sets may also be triggered in pairs.

In another example, the aperiodic ZP CSI-RS resource set list includes a maximum of six ZP CSI-RS resource sets.

For example, the seventh field is an existing ZP CSI-RS trigger field in DCI, the eighth field is a second ZP CSI-RS trigger field newly added to the DCI, and features of the seventh field and the eighth field include:

Lengths of the seventh field and the eighth field are determined based on half a number of ZP CSI-RS resource sets included in the aperiodic ZP CSI-RS resource set list, that is, $\left⌈{log}_{2}\left({n}_{zp}/2+1\right)\right⌉$ bits, where *n_{zp}* represents the number of ZP CSI-RS resource sets included in the aperiodic ZP CSI-RS resource set list.

As described in the manner 2, 0 ≤ *n_{zp}* ≤ 6. In this case, the lengths of the seventh field and the eighth field are 0, 1, or 2 bits.

A method for indicating the ZP CSI-RS resource set by the seventh field includes:
'01': used to trigger a ZP CSI-RS resource set whose ZP CSI-RS resource set index (ZP-CSI-RS-ResourceSetId) is 1;
'10': used to trigger a ZP CSI-RS resource set whose ZP CSI-RS resource set index (ZP-CSI-RS-ResourceSetId) is 2;
'11': used to trigger a ZP CSI-RS resource set whose ZP CSI-RS resource set index (ZP-CSI-RS-ResourceSetId) is 3; and
'00': reserved, and not used to trigger any ZP CSI-RS resource set.

A method for indicating the ZP CSI-RS resource set by the eighth field includes:
'01': used to trigger a ZP CSI-RS resource set whose ZP CSI-RS resource set index (ZP-CSI-RS-ResourceSetId) is 4;
'10': used to trigger a ZP CSI-RS resource set whose ZP CSI-RS resource set index (ZP-CSI-RS-ResourceSetId) is 5;
'11': used to trigger a ZP CSI-RS resource set whose ZP CSI-RS resource set index (ZP-CSI-RS-ResourceSetId) is 6; and
'00': reserved, and not used to trigger any ZP CSI-RS resource set.

For example, all ZP CSI-RS resources in ZP CSI-RS resource sets whose ZP CSI-RS resource set indexes are 1 to 3 and all ZP CSI-RS resources in ZP CSI-RS resource sets whose ZP CSI-RS resource set indexes are 4 to 6 are allocated to different time unit types. In this case, the seventh field and the eighth field are used to trigger allocation of the aperiodic ZP CSI-RS resources in the SBFD time unit and the non-SBFD time unit respectively.

It should be understood that after receiving the trigger message, the terminal device may trigger two (different) ZP CSI-RS resource sets indicated by the seventh field and the eighth field in the aperiodic ZP CSI-RS resource set list at the same time.

It should be understood that CSI measurement in the SBFD time unit and CSI measurement in the non-SBFD time unit are usually configured in pairs. Therefore, corresponding ZP CSI-RS resource sets may also be triggered in pairs.

Manner 2.3: Corresponding to the foregoing manner 3, that is, one aperiodic ZP CSI-RS resource set list is configured by using the second message, the aperiodic ZP CSI-RS resource set list includes a maximum of three ZP CSI-RS resource sets, and each ZP CSI-RS resource set includes a maximum of 32 ZP CSI-RS resources.

In the case shown in the manner 2.3, the trigger message indicates a triggered ZP CSI-RS resource set in the aperiodic ZP CSI-RS resource set list.

In the case shown in the manner 2.3, a maximum number of ZP CSI-RS resource sets included in the aperiodic ZP CSI-RS resource set list is expanded from 16 to 32.

Manner 2.4: Corresponding to the foregoing manner 4, that is, one aperiodic ZP CSI-RS resource set list configured by using the second message includes a maximum of three ZP CSI-RS resource sets, and each ZP CSI-RS resource set includes a maximum of 16 ZP CSI-RS resources. Each ZP CSI-RS resource includes two ZP CSI-RS sub-resources.

In the case shown in the manner 2.4, the trigger message indicates a triggered ZP CSI-RS resource set in the aperiodic ZP CSI-RS resource set list, and each ZP CSI-RS resource in the ZP CSI-RS resource set includes two ZP CSI-RS sub-resources.

In the case shown in the manner 2.4, the ZP CSI-RS resource is enhanced, and the two ZP CSI-RS sub-resources are configured to implicitly implement expansion of the ZP CSI-RS resource.

It should be understood that two ZP CSI-RS sub-resources in one ZP CSI-RS resource are always triggered at the same time.

It should be understood that CSI measurement in the SBFD time unit and CSI measurement in the non-SBFD time unit are usually configured in pairs. Therefore, corresponding ZP CSI-RS sub-resources may also be triggered in pairs.

Further, in this embodiment, after completing resource configuration by using the second message, and activating/deactivating or triggering the corresponding resource, the network device may send a first signal to the terminal device. The method procedure shown in FIG. 7 further includes the following step.

S740: The network device sends the first signal to the terminal device. Correspondingly, the terminal device receives the first signal from the network device.

Specifically, the network device does not send the first signal on the first resource and the second resource, and the terminal device does not receive the first signal on resources indicated by the first resource and the second resource.

For example, the network device does not send the first signal on time-frequency resources included in all ZP CSI-RS resources in the periodic ZP CSI-RS resource set (list) indicated by the second message. The terminal device does not receive the first signal on the time-frequency resources included in all the ZP CSI-RS resources in the periodic ZP CSI-RS resource set (list) indicated by the second message.

For another example, the network device does not send the first signal on time-frequency resources included in all ZP CSI-RS resources in the activated ZP CSI-RS resource set in the semi-persistent ZP CSI-RS resource set list indicated by the second message. The terminal device does not receive the first signal on the time-frequency resources included in all the ZP CSI-RS resources in the activated ZP CSI-RS resource set in the semi-persistent ZP CSI-RS resource set list indicated by the second message.

For still another example, the network device does not send the first signal on time-frequency resources included in all ZP CSI-RS resources in the triggered ZP CSI-RS resource set in the aperiodic ZP CSI-RS resource set list indicated by the second message. The terminal device does not receive the first signal on the time-frequency resources included in all the ZP CSI-RS resources in the triggered ZP CSI-RS resource set in the aperiodic ZP CSI-RS resource set list indicated by the second message.

In the communication method shown in FIG. 7, the terminal device receives the first message and the second message, where the first message indicates the terminal device to receive the first signal, and the second message indicates the first resource set including the first resource and the second resource; and the terminal device may receive the first signal on a resource other than the first resource and the second resource. Specifically, a time-frequency resource of the first resource is in the SBFD time unit, and a time-frequency resource of the second resource is in the non-SBFD time unit. It may be understood that in this technical solution, a network device may separately configure related resources for the SBFD time unit and the non-SBFD time unit by using the second message, to configure needed resources in different time units in a scenario in which a channel environment and an interference environment in the SBFD time unit are different from a channel environment and an interference environment in the non-SBFD time unit. This improves resource configuration flexibility.

This application further provides another communication method. The following describes the communication method in detail with reference to FIG. 9.

FIG. 9 is a schematic flowchart of a communication method according to an embodiment of this application. As shown in FIG. 9, the method includes the following steps.

S910: A network device sends first indication information to a terminal device. Correspondingly, the terminal device receives the first indication information from the network device.

The first indication information indicates that a first signal may be received on a first time-frequency resource. In other words, the first indication information indicates the first time-frequency resource used to receive the first signal. The first signal includes but is not limited to a PDSCH or another signal that cannot be received or sent on a ZP CSI-RS resource. Examples are not enumerated for description herein.

S920: The network device sends second indication information to the terminal device. Correspondingly, the terminal device receives the second indication information from the network device.

The second indication information indicates a first ZP CSI-RS resource, and the first ZP CSI-RS resource is a time-frequency resource that is not used to receive the first signal in a non-SBFD time unit. For example, the second indication information is used to configure one or more ZP CSI-RS resources, and the one or more ZP CSI-RS resources are not used to send or receive the PDSCH in the non-SBFD time unit. The first ZP CSI-RS resource is any one of the one or more ZP CSI-RS resources. For ease of description, an example in which the second indication information indicates the first ZP CSI-RS resource is used below for description.

S930: The network device sends third indication information to the terminal device. Correspondingly, the terminal device receives the third indication information from the network device.

For example, the third indication information indicates a second time-frequency resource, and the second time-frequency resource is a time-frequency resource that is not used to send or receive the first signal in an SBFD time unit.

Specifically, the second time-frequency resource is a subset of the first ZP CSI-RS resource, and the second time-frequency resource is not used to send or receive the first signal. In other words, a time-frequency resource #1 in the first ZP CSI-RS resource can be used to send or receive the first signal, and the time-frequency resource #1 does not include the second time-frequency resource. Alternatively, the third indication information indicates a time-frequency resource #1, the time-frequency resource #1 is a subset of the first ZP CSI-RS resource, and the time-frequency resource #1 is a time-frequency resource used to send or receive the first signal in the SBFD time unit. It may be understood that the third indication information can indicate a time-frequency resource, in the first ZP CSI-RS resource, on which a signal can be sent or received in the SBFD time unit, or the third indication information can indicate a time-frequency resource, in the first ZP CSI-RS resource, on which a signal cannot be sent or received in the SBFD time unit.

When the third indication information indicates the second time-frequency resource, the first signal is sent or received on a third time-frequency resource in the first time-frequency resource in the SBFD time unit, where the third time-frequency resource is a time-frequency resource in the first time-frequency resource other than the second time-frequency resource. The first signal is sent or received on a fourth time-frequency resource in the first time-frequency resource in the non-SBFD time unit, where the fourth time-frequency resource is a time-frequency resource in the first time-frequency resource other than the first ZP CSI-RS resource.

When the third indication information indicates the time-frequency resource #1, the first signal can be sent or received on the time-frequency resource #1 in the first time-frequency resource in the SBFD time unit. Further, the first signal is sent or received on a third time-frequency resource in the first time-frequency resource in the SBFD time unit, where the third time-frequency resource is a time-frequency resource in the first time-frequency resource other than the second time-frequency resource, and the second time-frequency resource is a time-frequency resource in the first ZP CSI-RS resource other than the time-frequency resource #1. The first signal can be sent or received on a fourth time-frequency resource in the first time-frequency resource in the non-SBFD time unit, where the fourth time-frequency resource is a time-frequency resource in the first time-frequency resource other than the first ZP CSI-RS resource.

The first time-frequency resource and the second time-frequency resource overlap (in other words, have an intersection, or totally or partially overlap), and the first time-frequency resource and a time-frequency resource in the first ZP CSI-RS resource other than the second time-frequency resource overlap (in other words, have an intersection, or totally or partially overlap).

For example, the first indication information, the second indication information, and the third indication information may be information carried in a same message, or the first indication information, the second indication information, and the third indication information are different messages. This is not limited in this embodiment.

The third indication information indicates that the terminal device cannot receive the PDSCH on the second time-frequency resource (or an RE) in the first ZP CSI-RS resource in the SBFD time unit. Similarly, the network device cannot send the PDSCH on the second time-frequency resource (or the RE) in the SBFD time unit. Alternatively, the third indication information indicates that the terminal device can receive the PDSCH on the time-frequency resource #1 (or an RE) in the first ZP CSI-RS resource in the SBFD time unit. Similarly, the network device can send the PDSCH on the time-frequency resource #1 (or the RE) in the first ZP CSI-RS resource in the SBFD time unit.

In addition, the terminal device cannot receive the PDSCH on the first ZP CSI-RS resource in the non-SBFD time unit. Similarly, the network device cannot send the PDSCH on the first ZP CSI-RS resource in the non-SBFD time unit.

It should be understood that the second indication information may indicate a plurality of ZP CSI-RS resources, and the third indication information may indicate a time-frequency resource (or an RE) in each of the plurality of ZP CSI-RS resources. The terminal device cannot receive the PDSCH on the time-frequency resource (or the RE).

For example, the ZP CSI-RS resource indicated by the second indication information includes a first ZP CSI-RS resource and a second ZP CSI-RS resource, and the third indication information may indicate a second time-frequency resource #1_1 in the first ZP CSI-RS resource and a second time-frequency resource #1_2 in the second ZP CSI-RS resource.

For ease of description, in this embodiment, an example in which the third indication information indicates the second time-frequency resource (or the RE) in the first ZP CSI-RS resource is used for description.

For example, the network device configures one or more of the following three resource sets or resource set lists for the terminal device:
one periodic ZP CSI-RS resource set;
one semi-persistent ZP CSI-RS resource set list; or
one aperiodic ZP CSI-RS resource set list.

Specifically, one periodic ZP CSI-RS resource set includes a maximum of 16 ZP CSI-RS resources.

One semi-persistent ZP CSI-RS resource set list includes a maximum of 16 ZP CSI-RS resource sets, and each ZP CSI-RS resource set includes a maximum of 16 ZP CSI-RS resources.

In addition, one aperiodic ZP CSI-RS resource set list includes a maximum of three ZP CSI-RS resource sets, and each ZP CSI-RS resource set includes a maximum of 16 ZP CSI-RS resources.

In this embodiment, the ZP CSI-RS resource configured by the network device for the terminal device is not limited.

It should be understood that based on an antenna configuration on a second-type SBFD network device side, compared with the non-SBFD time unit, a number of antenna ports in the SBFD time unit is halved, so that a number of CSI-RS ports in the SBFD time unit is halved. Based on a mapping relationship between a number of CSI-RS ports and a CSI-RS time-frequency resource defined in a current protocol, as shown in Table 1 and FIG. 4, halving the number of CSI-RS ports further halves a number of CSI-RS time-frequency resources.

Therefore, a time-frequency resource used for a CSI-RS in the SBFD time unit is half a time-frequency resource used for a CSI-RS in the non-SBFD time unit. This means that a time-frequency resource used for a ZP CSI-RS in the SBFD time unit is also half a time-frequency resource used for a ZP CSI-RS in the non-SBFD time unit.

Based on the foregoing analysis, a possible method is to configure a ZP CSI-RS resource based on a CSI-RS port and a CSI-RS time-frequency resource in the non-SBFD time unit, and then indicate, by using the third indication information, a time-frequency resource that is in the ZP CSI-RS resource and that is in the SBFD time unit. For example, in a scenario in which an antenna configuration in the non-SBFD time unit and the SBFD time unit is the second-type antenna configuration shown above (that is, a number of antenna ports corresponding to the SBFD time unit is half the number of antenna ports corresponding to the non-SBFD time unit), the third indication information indicates that half the time-frequency resource in the ZP CSI-RS resource is in the SBFD time unit. For another example, when the number of antenna ports corresponding to the non-SBFD time unit is different from the number of antenna ports corresponding to the SBFD time unit (for example, the number of antenna ports corresponding to the SBFD time unit is less than the number of antenna ports corresponding to the non-SBFD time unit), the third indication information indicates a time-frequency resource that is in the ZP CSI-RS resource and that is actually used for the SBFD time unit. It should be understood that in this embodiment, the number of antenna ports corresponding to the SBFD time unit is different from the number of antenna ports corresponding to the non-SBFD time unit, and a specific difference between the number of antenna ports corresponding to the SBFD time unit and the number of antenna ports corresponding to the non-SBFD time unit is not limited.

For example, in this embodiment, that the third indication information indicates the second time-frequency resource (or the RE) includes but is not limited to the following several possible methods.

Implementation 1: The third indication information indicates at least one CSI-RS port, and the at least one CSI-RS port is associated with the second time-frequency resource. For example, the third indication information is a bitmap, and each bit is in one-to-one correspondence with a CSI-RS port.

For example, a value of a bit in the bitmap is '0', to indicate that a PDSCH can be sent or received on a time-frequency resource (or an RE) associated with a corresponding CSI-RS port (for example, the value of the bit is '0', and the CSI-RS port corresponding to the bit is associated with the time-frequency resource #1 that can be used to send or receive the first signal); or a value of a bit in the bitmap is '1', to indicate that a PDSCH cannot be sent or received on a time-frequency resource (or an RE) associated with a corresponding CSI-RS port (for example, the value of the bit is '1', and the CSI-RS port corresponding to the bit is associated with the second time-frequency resource that cannot be used to send or receive the first signal).

Alternatively, a value of a bit in the bitmap is '0', to indicate that a PDSCH cannot be sent or received on a time-frequency resource (or an RE) associated with a corresponding CSI-RS port (for example, the value of the bit is '0', and the CSI-RS port corresponding to the bit is associated with the second time-frequency resource that cannot be used to send or receive the first signal); or a value of a bit in the bitmap is '1', to indicate that a PDSCH can be sent or received on a time-frequency resource (or an RE) associated with a corresponding CSI-RS port (for example, the value of the bit is '1', and the CSI-RS port corresponding to the bit is associated with the time-frequency resource #1 that can be used to send or receive the first signal).

In the case shown in the implementation 1, the time-frequency resource #1 includes the time-frequency resource associated with the CSI-RS port corresponding to the value '0' in the bitmap, and the second time-frequency resource includes the time-frequency resource associated with the CSI-RS port corresponding to the value '1' in the bitmap. Alternatively, the time-frequency resource #1 includes the time-frequency resource associated with the CSI-RS port corresponding to the value '1' in the bitmap, and the second time-frequency resource includes the time-frequency resource associated with the CSI-RS port corresponding to the value '0' in the bitmap.

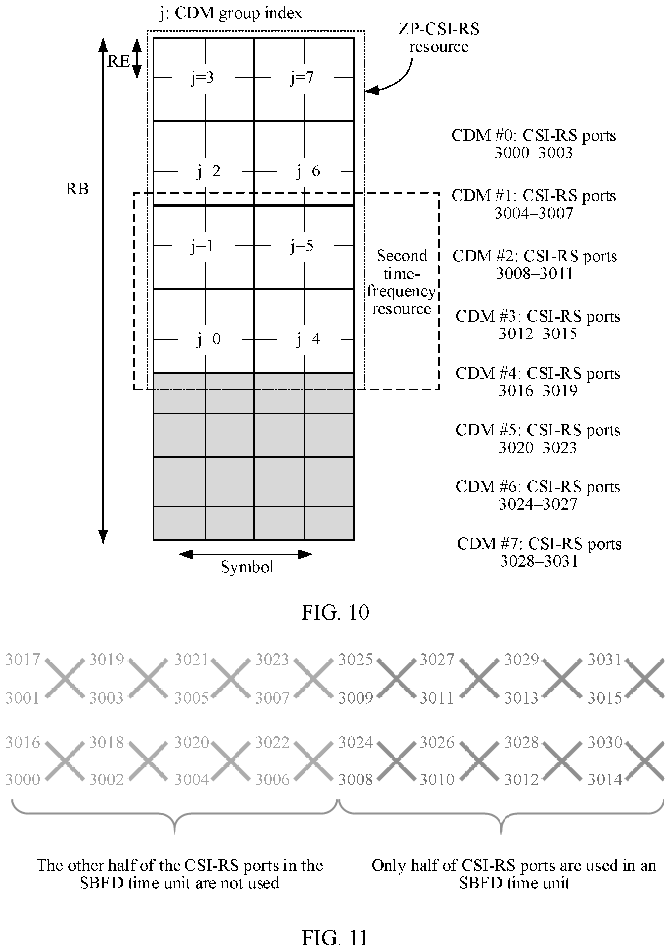

For example, as shown in FIG. 10 and FIG. 11, the number of CSI-RS ports is 32, N₁=8, N₂=2, and the bitmap of the third indication information is "11111111000000001111111100000000". The bitmap is associated with a CSI-RS port 3000 to a CSI-RS port 3031 respectively from the least significant bit to the most significant bit. '0' indicates that a PDSCH can be sent or received on a time-frequency resource (or an RE) associated with a corresponding CSI-RS port, that is, the time-frequency resource #1. '1' indicates that a PDSCH cannot be sent or received on a time-frequency resource (or an RE) associated with a corresponding CSI-RS port, that is, the second time-frequency resource.

Implementation 2: The third indication information indicates at least one code division multiplexing CDM group, and the at least one CDM group is associated with the second time-frequency resource. For example, the first indication information is a bitmap, and each bit is in one-to-one correspondence with a CDM group.

For example, a value of a bit in the bitmap is '0', to indicate that a PDSCH can be sent or received on a time-frequency resource (or an RE) associated with a corresponding CDM group (for example, the value of the bit is '0', and the CDM group corresponding to the bit is associated with the time-frequency resource #1 that can be used to send or receive the first signal); or a value of a bit in the bitmap is '1', to indicate that a PDSCH cannot be sent or received on a time-frequency resource (or an RE) associated with a corresponding CDM group (for example, the value of the bit is '1', and the CDM group corresponding to the bit is associated with the second time-frequency resource that cannot be used to send or receive the first signal).

Alternatively, a value of a bit in the bitmap is '0', to indicate that a PDSCH cannot be sent or received on a time-frequency resource (or an RE) associated with a corresponding CDM group (for example, the value of the bit is '0', and the CDM group corresponding to the bit is associated with the second time-frequency resource that cannot be used to send or receive the first signal); or a value of a bit in the bitmap is '1', to indicate that a PDSCH can be sent or received on a time-frequency resource (or an RE) associated with a corresponding CDM group (for example, the value of the bit is '1', and the CDM group corresponding to the bit is associated with the time-frequency resource #1 that can be used to send or receive the first signal).

In the case shown in the implementation 2, the time-frequency resource #1 includes the time-frequency resource associated with the CDM group corresponding to the value '0' in the bitmap, and the second time-frequency resource includes the time-frequency resource associated with the CDM group corresponding to the value '1' in the bitmap. Alternatively, the time-frequency resource #1 includes the time-frequency resource associated with the CDM group corresponding to the value '1' in the bitmap, and the second time-frequency resource includes the time-frequency resource associated with the CDM group corresponding to the value '0' in the bitmap. For example, as shown in FIG. 10 and FIG. 11, the number of CSI-RS ports is 32, *N*₁=8, and *N*₂=2, and the bitmap of the first indication information is "11001100". The bitmap is associated with a CDM group 0 to a CDM group 7 respectively from the least significant bit to the most significant bit. '0' indicates that a PDSCH can be sent or received on a time-frequency resource (or an RE) associated with a corresponding CDM group, that is, the time-frequency resource #1. '1' indicates that a PDSCH cannot be sent or received on a time-frequency resource (or an RE) associated with a corresponding CDM group, that is, the second time-frequency resource.

Implementation 3: The third indication information indicates a number N of ports, and the N CSI-RS ports are associated with the second time-frequency resource.

In the case shown in the implementation 3, the time-frequency resource #1 includes the time-frequency resource associated with the N CSI-RS ports, and the second time-frequency resource includes a time-frequency resource associated with (M-N) CSI-RS ports in M CSI-RS ports other than the N CSI-RS ports. Alternatively, the time-frequency resource #1 includes a time-frequency resource associated with (M-N) CSI-RS ports in M CSI-RS ports other than the N CSI-RS ports, and the second time-frequency resource includes the time-frequency resource associated with the N CSI-RS ports.

In a possible implementation, an antenna configuration of the network device is single-panel, or in other words, a codebook type is configured as single-panel.

In this implementation, CSI-RS port indexes are 0~*N*/2 - 1 and (0~*N*/2 - 1) + *M*/2; or in this implementation, CSI-RS port indexes are *M -* (0~*N*/2 - 1) - 1 and *M*/2 - (0~*N*/2 - 1) - 1, where M is a total number of antenna ports of the network device.

For example, CSI-RS ports whose CSI-RS port indexes are 0~*N*/2 - 1 and (0~*N*/2 - 1) + *M*/2 are associated with the time-frequency resource #1 that can be used to send or receive the first signal, and CSI-RS ports whose CSI-RS port indexes are *M* - (0~*N*/2 - 1) - 1 and *M*/2 - (0*~N*/2 - 1) - 1 are associated with the second time-frequency resource that cannot be used to send or receive the first signal.

In another possible implementation, an antenna configuration of the network device is dual-panel, or in other words, a codebook type is configured as dual-panel.

In this implementation, CSI-RS port indexes are 0~*N*/2 - 1 or $M / 2 - \left(0∼\frac{N}{2}-1\right) - 1$ ; or. In this implementation, CSI-RS port indexes are *M* - *(0~N*/*2* - 1) - 1 or *(0~N*/*2* - 1) + *M*/2, where M is a total number of antenna ports of the network device.

For example, CSI-RS ports whose CSI-RS port indexes are 0~*N*/2 - 1 or $M / 2 - \left(0∼\frac{N}{2}-1\right) - 1$ are associated with the time-frequency resource #1 that can be used to send or receive the first signal, and CSI-RS ports whose CSI-RS port indexes are *M* - (0~*N*/2 - 1) - 1 or (0~*N*/2 - 1) + *M*/2 are associated with the second time-frequency resource that cannot be used to send or receive the first signal. Optionally, the network device may further send fourth indication information to the terminal device, to indicate the CSI-RS port index by using the foregoing method.

In this embodiment, the third indication information may be carried in any one of the following manners.

The third indication information is configured in the first ZP CSI-RS resource, and the third indication information indicates the second time-frequency resource in the first ZP CSI-RS resource; or
the third indication information is configured in a first ZP CSI-RS resource set, and the third indication information indicates a second time-frequency resource in each ZP CSI-RS resource in the first ZP CSI-RS resource set; or
the third indication information is configured in a first ZP CSI-RS resource set list, and the third indication information indicates a second time-frequency resource in each ZP CSI-RS resource in the first ZP CSI-RS resource set list; or
the third indication information is configured in a PDSCH configuration (for example, a higher layer information element PDSCH-Config), and the third indication information indicates a second time-frequency resource in each ZP CSI-RS resource in all ZP CSI-RS resource set lists; or
the third indication information is configured in a CSI reporting resource setting (for example, CSI Reporting Setting or a higher layer information element CSI-ReportCofig), and the third indication information indicates a second time-frequency resource in each ZP CSI-RS resource in all ZP CSI-RS resource set lists.

It should be noted that if the one or more ZP CSI-RS resources are semi-persistent ZP CSI-RS resources, the ZP CSI-RS resource needs to be activated/deactivated by using a message; or if the one or more ZP CSI-RS resources are aperiodic ZP CSI-RS resources, the ZP CSI-RS resource needs to be triggered by using a message. The method procedure shown in FIG. 9 may further include the following step.

S940: The network device sends an activation/deactivation message to the terminal device. Correspondingly, the terminal device receives the activation/deactivation message from the network device.

The activation/deactivation message may be a MAC CE, and the MAC CE carries a field indicating to activate/deactivate a ZP CSI-RS resource.

Optionally, the activation/deactivation message indicates an activated/deactivated ZP CSI-RS resource set in the semi-persistent ZP CSI-RS resource set list.

S950: The network device sends a trigger message to the terminal device. Correspondingly, the terminal device receives the trigger message from the network device.

The trigger message may be DCI, and the DCI carries a field indicating to trigger a ZP CSI-RS resource.

Optionally, the trigger message indicates a triggered ZP CSI-RS resource set in the aperiodic ZP CSI-RS resource set list.

Further, in this embodiment, after completing resource configuration by using the first indication information, the second indication information, and the third indication information, and activating/deactivating or triggering the corresponding resource, the network device may send the first signal to the terminal device. The method procedure shown in FIG. 9 further includes the following step.

S960: The network device sends the first signal to the terminal device. Correspondingly, the terminal device receives the first signal from the network device.

Specifically, the network device does not send the first signal on a second time-frequency resource included in any ZP CSI-RS resource indicated by the third indication information, and the terminal device does not receive the first signal on a second time-frequency resource included in any ZP CSI-RS resource indicated by the third indication information.

For example, the network device does not send the first signal on a second time-frequency resource included in any ZP CSI-RS resource in the configured periodic ZP CSI-RS resource set, and the terminal device does not receive the first signal on a second time-frequency resource included in any ZP CSI-RS resource in the configured periodic ZP CSI-RS resource set.

For another example, the network device does not send the first signal on a second time-frequency resource included in any ZP CSI-RS resource in the activated ZP CSI-RS resource set in the configured semi-persistent ZP CSI-RS resource set list, and the terminal device does not receive the first signal on a second time-frequency resource included in any ZP CSI-RS resource in the activated ZP CSI-RS resource set in the configured semi-persistent ZP CSI-RS resource set list.

For still another example, the network device does not send the first signal on a second time-frequency resource included in any ZP CSI-RS resource in the triggered ZP CSI-RS resource set in the configured aperiodic ZP CSI-RS resource set list, and the terminal device does not receive the first signal on a second time-frequency resource included in any ZP CSI-RS resource in the ZP CSI-RS resource set triggered by the third information in the configured aperiodic ZP CSI-RS resource set list.

In the communication method shown in FIG. 9, the network device sends the third indication information to the terminal device, to indicate the second time-frequency resource in the first ZP CSI-RS resource, and the second time-frequency resource cannot be used to send or receive a signal. Therefore, the terminal device may receive the first signal on the resource, in the first time-frequency resource that is used to receive the first signal and that is indicated by the first indication information, other than the second time-frequency resource. The second time-frequency resource is in the SBFD time unit, to configure needed resources in different time units in a scenario in which a channel environment and an interference environment in the SBFD time unit are different from a channel environment and an interference environment in the non-SBFD time unit. This improves resource configuration flexibility.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be further understood that in some of the foregoing embodiments, a device in a conventional network architecture is mainly used as an example for description (for example, a network device and a terminal device). It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, a network device or a terminal device) may also be implemented by a component (for example, a chip or a circuit) of the device.

The communication methods provided in embodiments of this application are described in detail above with reference to FIG. 7 and FIG. 9. The foregoing communication method is mainly described from a perspective of interaction between the terminal device and the network device. It may be understood that, to implement the foregoing functions, the terminal device and the network device include corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

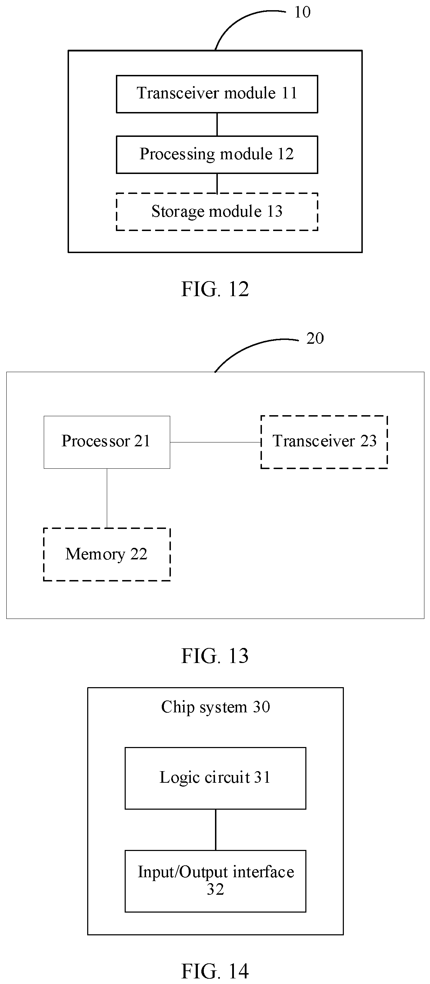

The following describes in detail communication apparatuses provided in this application with reference to FIG. 12 to FIG. 14. It should be understood that descriptions of apparatus embodiments correspond to the descriptions of the method embodiments. Therefore, for content that is not described in detail, refer to the foregoing method embodiments. For brevity, some content is not described again.

In embodiments of this application, the transmit-side device or the receive-side device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation. The following provides descriptions by using an example in which each functional module is obtained through division based on each corresponding function.

FIG. 12 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform operations related to receiving and sending. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may correspond to the terminal device in the foregoing method embodiments, or a component (for example, a chip) of the terminal device.

The apparatus 10 may implement corresponding steps or procedures performed by the terminal device in the foregoing method embodiments. The transceiver module 11 may be configured to perform receiving and sending-related operations of the terminal device in the foregoing method embodiments, and the processing module 12 may be configured to perform a processing-related operation of the terminal device in the foregoing method embodiments.

In a possible implementation, the transceiver module 11 is configured to receive a first message, where the first message indicates reception of a first signal. The transceiver module 11 is configured to receive a second message, where the second message indicates a first resource set including a first resource and a second resource, a time domain resource of the first resource is in an SBFD time unit, and a time domain resource of the second resource is in a non-SBFD time unit. The transceiver module 11 is configured to receive the first signal on a resource other than the first resource and the second resource.

In another possible implementation, the transceiver module 11 is configured to receive first indication information, where the first indication information indicates reception of a first signal on a first time-frequency resource. The transceiver module 11 is configured to receive second indication information, where the second indication information indicates a first ZP CSI-RS resource, and the first ZP CSI-RS resource is a time-frequency resource that is not used to receive the first signal in a non-SBFD time unit. The transceiver module 11 is configured to receive third indication information, where the third indication information indicates a second time-frequency resource, the second time-frequency resource is a subset of the first ZP CSI-RS resource, and the second time-frequency resource is a time-frequency resource that is not used to receive the first signal in an SBFD time unit. The transceiver module 11 is configured to receive, in the SBFD time unit, the first signal on a third time-frequency resource in the first time-frequency resource, where the third time-frequency resource is a time-frequency resource in the first time-frequency resource other than the second time-frequency resource. The transceiver module 11 is configured to receive, in the non-SBFD time unit, the first signal on a fourth time-frequency resource in the first time-frequency resource, where the fourth time-frequency resource is a time-frequency resource in the first time-frequency resource other than the first ZP CSI-RS resource; and the first time-frequency resource overlaps the second time-frequency resource, and the first time-frequency resource overlaps a time-frequency resource in the first ZP CSI-RS resource other than the second time-frequency resource.

When the apparatus 10 is configured to perform the method in FIG. 7, the transceiver module 11 may be configured to perform steps of receiving and sending information in the method, for example, steps S710, S720, S730, and S740; and the processing module 12 may be configured to perform a processing step in the method.

When the apparatus 10 is configured to perform the method in FIG. 9, the transceiver module 11 may be configured to perform steps of receiving and sending information in the method, for example, steps S910, S920, S930, S940, S950, and S960; and the processing module 12 may be configured to perform a processing step in the method.

It should be understood that a specific process in which the units perform the foregoing corresponding steps is described in detail in the foregoing method embodiments. For brevity, details are not described herein.

In another design, the apparatus 10 may correspond to the network device in the foregoing method embodiments, or a component (for example, a chip) in the network device.

The apparatus 10 may implement corresponding steps or procedures performed by the network device in the foregoing method embodiments. The transceiver module 11 may be configured to perform receiving and sending-related operations of the network device in the foregoing method embodiments, and the processing module 12 may be configured to perform a processing-related operation of the network device in the foregoing method embodiments.

In a possible implementation, the transceiver module 11 is configured to send a first message, where the first message indicates reception of a first signal. The transceiver module 11 is configured to send a second message, where the second message indicates a first resource set including a first resource and a second resource, a time domain resource of the first resource is in an SBFD time unit, and a time domain resource of the second resource is in a non-SBFD time unit. The transceiver module 11 is configured to send the first signal on a resource other than the first resource and the second resource.

In another possible implementation, the transceiver module 11 is configured to send first indication information, where the first indication information indicates reception of a first signal on a first time-frequency resource. The transceiver module 11 is configured to send second indication information, where the second indication information indicates a first ZP CSI-RS resource, and the first ZP CSI-RS resource is a time-frequency resource that is not used to receive the first signal in a non-SBFD time unit. The transceiver module 11 is configured to send third indication information, where the third indication information indicates a second time-frequency resource, the second time-frequency resource is a subset of the first ZP CSI-RS resource, and the second time-frequency resource is a time-frequency resource that is not used to receive the first signal in a subband full duplex SBFD time unit. The transceiver module 11 is configured to send, in the SBFD time unit, the first signal on a time-frequency resource in the first time-frequency resource other than the second time-frequency resource. The transceiver module 11 is configured to send, in the non-SBFD time unit, the first signal on a fourth time-frequency resource in the first time-frequency resource, where the fourth time-frequency resource is a time-frequency resource in the first time-frequency resource other than the first ZP CSI-RS resource; and the first time-frequency resource overlaps the second time-frequency resource, and the first time-frequency resource overlaps a time-frequency resource in the first ZP CSI-RS resource other than the second time-frequency resource.

When the apparatus 10 is configured to perform the method in FIG. 7, the transceiver module 11 may be configured to perform steps of receiving and sending information in the method, for example, steps S710, S720, S730, and S740; and the processing module 12 may be configured to perform a processing step in the method.

When the apparatus 10 is configured to perform the method in FIG. 9, the transceiver module 11 may be configured to perform steps of receiving and sending information in the method, for example, steps S910, S920, S930, S940, S950, and S960; and the processing module 12 may be configured to perform a processing step in the method.

It should be understood that a specific process in which the units perform the foregoing corresponding steps is described in detail in the foregoing method embodiments. For brevity, details are not described herein.

It should be further understood that the apparatus 10 herein is presented in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the terminal device or the network device) in the foregoing methods. The function may be implemented by hardware, or may be implemented by hardware executing corresponding software. The hardware or software includes one or more modules corresponding to the foregoing function. For example, a transceiver module may be replaced with a transceiver (for example, a transmitting unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver module 11 may alternatively be a transceiver circuit (for example, the transceiver module may include a receiver circuit and a transmitter circuit), and the processing module may be a processing circuit.

FIG. 13 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 13, the apparatus 20 further includes the memory 22, and the memory 22 is configured to store the computer program or the instructions and/or the data. The memory 22 and the processor 21 may be integrated or disposed separately. Optionally, there are one or more memories 22.

Optionally, as shown in FIG. 13, the apparatus 20 further includes a transceiver 23. The transceiver 23 is configured to receive and/or send a signal. For example, the processor 21 is configured to control the transceiver 23 to receive and/or send the signal.

In a solution, the apparatus 20 is configured to implement operations performed by the terminal device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 14 is a diagram of a chip system 30 according to an embodiment of this application. The chip system 30 (may also be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device in the foregoing method embodiments.

For example, the logic circuit 31 is configured to implement a processing-related operation performed by the terminal device in the foregoing method embodiments, and the input/output interface 32 is configured to implement sending and/or receiving-related operations performed by the terminal device in the foregoing method embodiments.

An embodiment of this application further provides a computer-readable storage medium. The computer-readable storage medium stores computer instructions for implementing the method performed by a device in the foregoing method embodiments.

For example, when a computer program is executed by a computer, the computer is caused to implement the methods performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device and network device.

For explanations and beneficial effects of related content in any one of the apparatuses provided above, refer to the corresponding method embodiment provided above. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first message, wherein the first message indicates reception of a first signal;
receiving a second message, wherein the second message indicates a first resource set comprising a first resource and a second resource, a time domain resource of the first resource is in a subband full duplex SBFD time unit, and a time domain resource of the second resource is in a non-SBFD time unit; and
receiving the first signal on a resource other than the first resource and the second resource.

2. The method according to claim 1, wherein the first resource set comprises one or more of the following:
two periodic zero-power channel state information reference signal ZP CSI-RS resource sets, two semi-persistent ZP CSI-RS resource set lists, or two aperiodic ZP CSI-RS resource set lists, wherein the two periodic ZP CSI-RS resource sets comprise a first periodic ZP CSI-RS resource set and a second periodic ZP CSI-RS resource set, the two semi-persistent ZP CSI-RS resource set lists comprise a first semi-persistent ZP CSI-RS resource set list and a second semi-persistent ZP CSI-RS resource set list, and the two aperiodic ZP CSI-RS resource set lists comprise a first aperiodic ZP CSI-RS resource set list and a second aperiodic ZP CSI-RS resource set list; and
the first resource is contained in the first periodic ZP CSI-RS resource set, and the second resource is contained in the second periodic ZP CSI-RS resource set; or
the first resource is contained in the first semi-persistent ZP CSI-RS resource set list, and the second resource is contained in the second semi-persistent ZP CSI-RS resource set list; or
the first resource is contained in the first aperiodic ZP CSI-RS resource set list, and the second resource is contained in the second aperiodic ZP CSI-RS resource set list.

3. The method according to claim 2, wherein if the first resource is contained in the first semi-persistent ZP CSI-RS resource set list and the second resource is contained in the second semi-persistent ZP CSI-RS resource set list, the method further comprises:
receiving a third message, wherein the third message comprises a first field and a second field; and
the first field is used to activate the first resource in the first semi-persistent ZP CSI-RS resource set list, and the second field is used to activate the second resource in the second semi-persistent ZP CSI-RS resource set list; or
the first field is used to deactivate a third resource in the first semi-persistent ZP CSI-RS resource set list, and the second field is used to deactivate a fourth resource in the second semi-persistent ZP CSI-RS resource set list.

4. The method according to claim 2, wherein if the first resource is contained in the first aperiodic ZP CSI-RS resource set list and the second resource is contained in the second aperiodic ZP CSI-RS resource set list, the method further comprises:
receiving a fourth message, wherein the fourth message comprises a third field and a fourth field, the third field is used to trigger the first resource in the first aperiodic ZP CSI-RS resource set list, and the fourth field is used to trigger the second resource in the second aperiodic ZP CSI-RS resource set list.

5. The method according to claim 1, wherein the first resource set comprises one or more of the following:
one periodic zero-power channel state information reference signal ZP CSI-RS resource set list, one semi-persistent ZP CSI-RS resource set list, or one aperiodic ZP CSI-RS resource set list, wherein
the periodic ZP CSI-RS resource set list comprises less than or equal to two ZP CSI-RS resource sets, the semi-persistent ZP CSI-RS resource set list comprises less than or equal to 32 ZP CSI-RS resource sets, and the aperiodic ZP CSI-RS resource set list comprises less than or equal to six or seven ZP CSI-RS resource sets.

6. The method according to claim 5, wherein if the first resource and the second resource are comprised in the semi-persistent ZP CSI-RS resource set list, the method further comprises:
receiving a fifth message, wherein the fifth message comprises a fifth field and a sixth field, the fifth field is used to activate the first resource in the semi-persistent ZP CSI-RS resource set list, and the sixth field is used to activate the second resource in the semi-persistent ZP CSI-RS resource set list; or
the fifth field is used to deactivate a third resource in the semi-persistent ZP CSI-RS resource set list, and the sixth field is used to deactivate a fourth resource in the semi-persistent ZP CSI-RS resource set list.

7. The method according to claim 5, wherein if the first resource and the second resource are comprised in the aperiodic ZP CSI-RS resource set list, the method further comprises:
receiving a sixth message, wherein the sixth message comprises a seventh field and an eighth field, the seventh field is used to trigger the first resource in the aperiodic ZP CSI-RS resource set list, and the eighth field is used to trigger the second resource in the aperiodic ZP CSI-RS resource set list.

8. The method according to claim 1, wherein the first resource set comprises one or more of the following:
one periodic zero-power channel state information reference signal ZP CSI-RS resource set, one semi-persistent ZP CSI-RS resource set list, or one aperiodic ZP CSI-RS resource set list, wherein each ZP CSI-RS resource set comprises less than or equal to 16 ZP CSI-RS resources, each ZP CSI-RS resource comprises a first ZP CSI-RS sub-resource and a second ZP CSI-RS sub-resource, the first resource belongs to the first ZP CSI-RS sub-resource, and the second resource belongs to the second ZP CSI-RS sub-resource.

9. The method according to claim 8, wherein the first ZP CSI-RS sub-resource or the second ZP CSI-RS sub-resource comprises at least one of the following parameters:
a resource mapping parameter, a periodicity, or an offset parameter.

10. A communication method, comprising:
sending a first message, wherein the first message indicates reception of a first signal;
sending a second message, wherein the second message indicates a first resource set comprising a first resource and a second resource, a time domain resource of the first resource is in a subband full duplex SBFD time unit, and a time domain resource of the second resource is in a non-SBFD time unit; and
sending the first signal on a resource other than the first resource and the second resource.

11. The method according to claim 10, wherein the first resource set comprises one or more of the following:
two periodic zero-power channel state information reference signal ZP CSI-RS resource sets, two semi-persistent ZP CSI-RS resource set lists, or two aperiodic ZP CSI-RS resource set lists, wherein the two periodic ZP CSI-RS resource sets comprise a first periodic ZP CSI-RS resource set and a second periodic ZP CSI-RS resource set, the two semi-persistent ZP CSI-RS resource set lists comprise a first semi-persistent ZP CSI-RS resource set list and a second semi-persistent ZP CSI-RS resource set list, and the two aperiodic ZP CSI-RS resource set lists comprise a first aperiodic ZP CSI-RS resource set list and a second aperiodic ZP CSI-RS resource set list; and
the first resource is contained in the first periodic ZP CSI-RS resource set, and the second resource is contained in the second periodic ZP CSI-RS resource set; or
the first resource is contained in the first semi-persistent ZP CSI-RS resource set list, and the second resource is contained in the second semi-persistent ZP CSI-RS resource set list; or
the first resource is contained in the first aperiodic ZP CSI-RS resource set list, and the second resource is contained in the second aperiodic ZP CSI-RS resource set list.

12. The method according to claim 11, wherein if the first resource is contained in the first semi-persistent ZP CSI-RS resource set list, and the second resource is contained in the second semi-persistent ZP CSI-RS resource set list, the method further comprises:
sending a third message, wherein the third message comprises a first field and a second field, the first field is used to activate the first resource in the first semi-persistent ZP CSI-RS resource set list, and the second field is used to activate the second resource in the second semi-persistent ZP CSI-RS resource set list; or
the first field is used to deactivate a third resource in the first semi-persistent ZP CSI-RS resource set list, and the second field is used to deactivate a fourth resource in the second semi-persistent ZP CSI-RS resource set list.

13. The method according to claim 11, wherein if the first resource is contained in the first aperiodic ZP CSI-RS resource set list, and the second resource is contained in the second aperiodic ZP CSI-RS resource set list, the method further comprises:
sending a fourth message, wherein the fourth message comprises a third field and a fourth field, the third field is used to trigger the first resource in the first aperiodic ZP CSI-RS resource set list, and the fourth field is used to trigger the second resource in the second aperiodic ZP CSI-RS resource set list.

14. The method according to claim 10, wherein the first resource set comprises one or more of the following:
one periodic zero-power channel state information reference signal ZP CSI-RS resource set list, one semi-persistent ZP CSI-RS resource set list, or one aperiodic ZP CSI-RS resource set list, wherein the periodic ZP CSI-RS resource set list comprises less than or equal to two ZP CSI-RS resource sets, the semi-persistent ZP CSI-RS resource set list comprises less than or equal to 32 ZP CSI-RS resource sets, and the aperiodic ZP CSI-RS resource set list comprises less than or equal to six or seven ZP CSI-RS resource sets.

15. The method according to claim 14, wherein if the first resource and the second resource are comprised in the semi-persistent ZP CSI-RS resource set list, the method further comprises:
sending a fifth message, wherein the fifth message comprises a fifth field and a sixth field, the fifth field is used to activate the first resource in the semi-persistent ZP CSI-RS resource set list, and the sixth field is used to activate the second resource in the semi-persistent ZP CSI-RS resource set list; or
the fifth field is used to deactivate a third resource in the semi-persistent ZP CSI-RS resource set list, and the sixth field is used to deactivate a fourth resource in the semi-persistent ZP CSI-RS resource set list.

16. The method according to claim 14, wherein if the first resource and the second resource are comprised in the aperiodic ZP CSI-RS resource set list, the method further comprises:
sending a sixth message, wherein the sixth message comprises a seventh field and an eighth field, the seventh field is used to trigger the first resource in the aperiodic ZP CSI-RS resource set list, and the eighth field is used to trigger the second resource in the aperiodic ZP CSI-RS resource set list.

17. A communication method, comprising:
receiving first indication information, wherein the first indication information indicates reception of a first signal on a first time-frequency resource;
receiving second indication information, wherein the second indication information indicates a first ZP CSI-RS resource, and the first ZP CSI-RS resource is a time-frequency resource that is not used to receive the first signal in a non-subband full duplex SBFD time unit;
receiving third indication information, wherein the third indication information indicates a second time-frequency resource, the second time-frequency resource is a subset of the first ZP CSI-RS resource, and the second time-frequency resource is a time-frequency resource that is not used to receive the first signal in an SBFD time unit;
receiving, in the SBFD time unit, the first signal on a third time-frequency resource of the first time-frequency resource, wherein the third time-frequency resource is a time-frequency resource in the first time-frequency resource other than the second time-frequency resource; and
receiving, in the non-SBFD time unit, the first signal on a fourth time-frequency resource in the first time-frequency resource, wherein the fourth time-frequency resource is a time-frequency resource in the first time-frequency resource other than the first ZP CSI-RS resource; and
the first time-frequency resource overlaps the second time-frequency resource, and the first time-frequency resource overlaps a time-frequency resource in the first ZP CSI-RS resource other than the second time-frequency resource.

18. A communication method, comprising:
sending first indication information, wherein the first indication information indicates reception of a first signal on a first time-frequency resource;
sending second indication information, wherein the second indication information indicates a first ZP CSI-RS resource, and the first ZP CSI-RS resource is a time-frequency resource that is not used to receive the first signal in a non-subband full duplex SBFD time unit;
sending third indication information, wherein the third indication information indicates a second time-frequency resource, the second time-frequency resource is a subset of the first ZP CSI-RS resource, and the second time-frequency resource is a time-frequency resource that is not used to receive the first signal in an SBFD time unit;
sending, in the SBFD time unit, the first signal on a third time-frequency resource in the first time-frequency resource, wherein the third time-frequency resource is a time-frequency resource in the first time-frequency resource other than the second time-frequency resource; and
sending, in the non-SBFD time unit, the first signal on a fourth time-frequency resource in the first time-frequency resource, wherein the fourth time-frequency resource is a time-frequency resource in the first time-frequency resource other than the first ZP CSI-RS resource; and
the first time-frequency resource overlaps the second time-frequency resource, and the first time-frequency resource overlaps a time-frequency resource in the first ZP CSI-RS resource other than the second time-frequency resource.

19. The method according to claim 17 or 18, wherein that the third indication information indicates the second time-frequency resource comprises:
the third indication information indicates at least one channel state information reference signal CSI-RS port, and the at least one CSI-RS port is associated with the second time-frequency resource.

20. The method according to claim 17 or 18, wherein that the third indication information indicates the second time-frequency resource comprises:
the third indication information indicates at least one code division multiplexing CDM group, and the at least one CDM group is associated with the second time-frequency resource.

21. The method according to claim 17 or 18, wherein that the third indication information indicates the second time-frequency resource comprises:
the third indication information indicates a number N of CSI-RS ports, and the N CSI-RS ports are associated with the second time-frequency resource.

22. The method according to claim 21, wherein if a codebook type is configured as single-panel, the codebook type is related to an antenna configuration of a network device, and indexes of the N CSI-RS ports comprise:
$0 ∼ \frac{N}{2} - 1$ and $\left(0∼\frac{N}{2}-1\right) + M / 2$; or $M - \left(0∼\frac{N}{2}-1\right) - 1$ and *M*/2 - (0~*N*/2 - 1) *-* 1, wherein
M indicates a total number of antenna ports of the network device.

23. The method according to claim 21, wherein if a codebook type is configured as dual-panel, the codebook type is related to an antenna configuration of the network device, and indexes of the N CSI-RS ports comprise:
$0 ∼ \frac{N}{2} - 1$ and $M / 2 - \left(0∼\frac{N}{2}-1\right) - 1$; or $M - \left(0∼\frac{N}{2}-1\right) - 1$ and (0~*N*/2 - 1) + *M*/2 , wherein
M indicates a total number of antenna ports of the network device.

24. The method according to any one of claims 17 to 23, wherein the third indication information is configured in the first ZP CSI-RS resource, and the third indication information indicates the second time-frequency resource in the first ZP CSI-RS resource; or
the third indication information is configured in a first ZP CSI-RS resource set, and the third indication information indicates a second time-frequency resource in each ZP CSI-RS resource in the first ZP CSI-RS resource set; or
the third indication information is configured in a first ZP CSI-RS resource set list, and the third indication information indicates a second time-frequency resource in each ZP CSI-RS resource in the first ZP CSI-RS resource set list; or
the third indication information is configured in a PDSCH configuration or a CSI reporting resource setting, and the third indication information indicates a second time-frequency resource in each ZP CSI-RS resource in all ZP CSI-RS resource set lists.

25. A communication apparatus, configured to implement the method according to any one of claims 1 to 9, or configured to implement the method according to any one of claims 17 or 19 to 24.

26. The communication apparatus according to claim 25, wherein the communication apparatus comprises a terminal device or a chip.

27. A communication apparatus, configured to implement the method according to any one of claims 10 to 16, or configured to implement the method according to any one of claims 18 to 24.

28. The communication apparatus according to claim 27, wherein the communication apparatus comprises a network device or a chip.

29. A computer-readable storage medium, wherein the computer-readable storage medium comprises computer instructions; and when the computer instructions are run, the method according to any one of claims 1 to 24 is performed.

30. A computer program, wherein when the computer program is run, the method according to any one of claims 1 to 24 is performed.
